# EUROPEAN PATENT APPLICATION

(11) **EP 4 572 397 A1**
(43) Date of publication of application: **18.06.2025**
(21) Application number: 22954255.0
(22) Date of filing: 08.08.2022
(51) Int. Cl.: H04W 36/00

(54) **RECORDING AND REPORTING METHOD AND APPARATUS FOR SUCCESSFUL HANDOVER REPORT (SHR) IN RADIO ACCESS TECHNOLOGY (RAT)**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/110952
(87) International publication number: WO 2024/031275

(57) **Abstract**

The embodiments of the present disclosure can be applied to the technical field of communications. Disclosed are a recording and reporting method and apparatus for a successful handover report (SHR) in RAT. The method executed by a terminal device comprises: receiving SHR configuration information sent by a network-side device in a source cell, wherein the SHR configuration information is used for instructing the terminal device to record an SHR according to the SHR configuration information after the terminal device is successfully handed over from the source cell to a target cell, the source cell being a long-term evolution (LTE) cell and the target cell being a new-radio (NR) cell, or the source cell being an NR cell and the target cell being an LTE cell; and in response to being successfully handed over from the source cell to the target cell, recording the SHR according to the SHR configuration information. In this way, the terminal device supports the reception, in an LTE cell, of SHR configuration information configured by a network-side device, and supports the recording of an SHR in a scenario in which the terminal device is handed over from an LTE cell to an NR cell, or supports the recording of an SHR in a scenario in which the terminal device is handed over from an NR cell to an LTE cell.

## Description

### FIELD

The present disclosure relates to the technical field of communication technologies, and more particularly to a method and a device for recording and reporting a successful handover report (SHR) in a radio access technology (RAT).

### BACKGROUND

In the related technology, the SHR only supports recording in a scenario where a terminal device switches from a new radio (NR) cell to another NR cell, but does not support recording in the scenario where the terminal device switches from a Long Term Evolution (LTE) cell to an NR cell, or does not support recording in the scenario where the terminal device switches from an NR cell to an LTE cell. This is a problem that needs to be solved urgently.

### SUMMARY

An embodiment of the present disclosure provides a method and device for recording and reporting an SHR in an RAT, in which a terminal device supports receiving SHR configuration information configured by a network device in an LTE cell, and supports recording the SHR in a scenario where the terminal device switches from an LTE cell to an NR cell, or supports recording the SHR in a scenario where the terminal device switches from an NR cell to an LTE cell.

In a first aspect, an embodiment of the present disclosure provides a method for recording and reporting an SHR in an RAT, the method is performed by a terminal device and includes: receiving SHR configuration information sent by a network device in a source cell, in which the SHR configuration information is used to instruct the terminal device to record the SHR based on the SHR configuration information after a successful handover of the terminal device from the source cell to a target cell, the source cell is a long term evolution (LTE) cell, and the target cell is a new radio (NR) cell, or the source cell is an NR cell, and the target cell is an LTE cell; in response to the successful handover of the terminal device from the source cell to the target cell, recording the SHR based on the SHR configuration information.

In this technical solution, a terminal device receives the SHR configuration information sent by a network device in the source cell, in which the SHR configuration information is used to instruct the terminal device to record the SHR based on the SHR configuration information after a successful handover of the terminal device from the source cell to the target cell, the source cell is an LTE cell, the target cell is an NR cell, or the source cell is an NR cell, and the target cell is an LTE cell; in response to the successful handover of the terminal device from the source cell to the target cell, the SHR is recorded based on the SHR configuration information. Thus, the terminal device supports receiving the SHR configuration information configured by the network device in the LTE cell, and supports recording the SHR in a scenario of handover from an LTE cell to an NR cell, or supports recording the SHR in a scenario of handover from an NR cell to an LTE cell.

In a second aspect, an embodiment of the present disclosure provides a method for recording and reporting an SHR in an RAT, the method is executed by a network device, and the method includes: sending SHR configuration information to a terminal device in a source cell, in which the SHR configuration information is used to instruct the terminal device to record the SHR based on the SHR configuration information after a successful handover of the terminal device from the source cell to a target cell, the source cell is an LTE cell, and the target cell is an NR cell, or the source cell is an NR cell and the target cell is an LTE cell.

In a third aspect, an embodiment of the present disclosure provides a communication device, which has some or all of the functions of the terminal device in the method described in the first aspect above. For example, the functions of the communication device may have some or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In one implementation, the structure of the communication device may include a transceiving module and a processing module, and the processing module is configured to support the communication device to perform the corresponding functions in the above method. The transceiving module is configured to support communication between the communication device and other devices. The communication device may also include a storage module, which is used to couple with the transceiving module and the processing module, and store the computer programs and data necessary for the communication device.

In one implementation, the communication device includes: a transceiving module, configured to configured to receive SHR configuration information sent by a network device in a source cell, in which the SHR configuration information is used to instruct the terminal device to record the SHR based on the SHR configuration information after a successful handover of the terminal device from the source cell to a target cell, the source cell is an LTE cell, and the target cell is an NR cell, or the source cell is an NR cell, and the target cell is an LTE cell; a processing module, configured to record the SHR based on the SHR configuration information in response to the successful handover of the terminal device from the source cell to the target cell.

In a fourth aspect, an embodiment of the present disclosure provides another communication device, which has some or all of the functions of the network device in the method example described in the second aspect above, such as the functions of the communication device may have some or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In one implementation, the structure of the communication device may include a transceiving module and a processing module, and the processing module is configured to support the communication device to perform the corresponding functions in the above method. The transceiving module is configured to support communication between the communication device and other devices. The communication device may also include a storage module, which is coupled to the transceiving module and the processing module, and stores computer programs and data necessary for the communication device.

In one implementation, the communication device includes: a transceiving module, configured to send SHR configuration information to a terminal device in a source cell, in which the SHR configuration information is used to instruct the terminal device to record the SHR based on the SHR configuration information after a successful handover of the terminal device from the source cell to a target cell, the source cell is an LTE cell, the target cell is an NR cell, or the source cell is an NR cell and the target cell is an LTE cell.

In a fifth aspect, an embodiment of the present disclosure provides a communication device, which includes a processor. When the processor calls a computer program in a memory, the method described in the first aspect is performed.

In a sixth aspect, an embodiment of the present disclosure provides a communication device, which includes a processor. When the processor calls a computer program in a memory, the method described in the second aspect is performed.

In a seventh aspect, an embodiment of the present disclosure provides a communication device, which includes a processor and a memory, a computer program is stored in the memory; the processor executes the computer program stored in the memory so that the communication device performs the method described in the first aspect above.

In an eighth aspect, an embodiment of the present disclosure provides a communication device, which includes a processor and a memory, a computer program is stored in the memory; the processor executes the computer program stored in the memory so that the communication device performs the method described in the second aspect above.

In a ninth aspect, an embodiment of the present disclosure provides a communication device, which includes a processor and an interface circuit, the interface circuit is used to receive code instructions and send the code instructions to the processor, and the processor is used to run the code instructions to enable the device to execute the method described in the first aspect above.

In a tenth aspect, an embodiment of the present disclosure provides a communication device, which includes a processor and an interface circuit, in which the interface circuit is used to receive code instructions and send the code instructions to the processor, and the processor is used to run the code instructions to enable the device to execute the method described in the second aspect above.

In the eleventh aspect, an embodiment of the present disclosure provides a random access system, the system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, an embodiment of the present disclosure provides a computer readable storage medium for storing instructions for the above-mentioned terminal device, and when the instructions are executed, the terminal device executes the method described in the first aspect.

In a thirteenth aspect, an embodiment of the present invention provides a readable storage medium for storing instructions used by the above-mentioned network device, and when the instructions are executed, the network device executes the method described in the above-mentioned second aspect.

In a fourteenth aspect, the present disclosure further provides a computer program product including a computer program, the computer program is executed on a computer to enable the computer to perform the method described in the first aspect above.

In a fifteenth aspect, the present disclosure further provides a computer program product comprising a computer program, the computer program is executed on a computer to enable the computer to perform the method described in the second aspect above.

In a sixteenth aspect, the present disclosure provides a chip system, which includes at least one processor and an interface, for supporting a terminal device to implement the functions in the first aspect, for example, determining or processing at least one of the data and information in the above method. In a possible design, the chip system also includes a memory, which is used to store computer programs and data necessary for the terminal device. The chip system can be composed of a chip, or can include a chip and other discrete devices.

In a seventeenth aspect, the present disclosure provides a chip system, which includes at least one processor and an interface, and is used to support a network device to implement the functions in the second aspect, for example, determining or processing at least one of the data and information in the above method. In a possible design, the chip system also includes a memory, and the memory is used to store computer programs and data necessary for the network device. The chip system can be composed of a chip, or can include a chip and other discrete devices.

In an eighteenth aspect, the present disclosure provides a computer program, the computer program is executed on a computer to enable the computer to execute the method described in the first aspect.

In a nineteenth aspect, the present disclosure provides a computer program, the computer program is executed on a computer to enable the computer to execute the method described in the second aspect.

### BRIEF DESCRIPTION OF THE DRAWINGS

In order to more clearly illustrate the technical solutions in the embodiments of the present disclosure or the background, the drawings required for use in the embodiments of the present disclosure or the background will be described below.
FIG. 1 is an architecture diagram of a communication system provided by an embodiment of the present disclosure;
FIG. 2 is a flow chart of a method for recording and reporting an SHR in an RAT provided by an embodiment of the present disclosure;
FIG. 3 is a flow chart of a method for recording and reporting an SHR in an RAT provided by an embodiment of the present disclosure;
FIG. 4 is a flow chart of a method for recording and reporting an SHR in an RAT provided by an embodiment of the present disclosure;
FIG. 5 is a flow chart of a method for recording and reporting an SHR in an RAT provided by an embodiment of the present disclosure;
FIG. 6 is a flow chart of a method for recording and reporting an SHR in an RAT provided by an embodiment of the present disclosure;
FIG. 7 is a flow chart of a method for recording and reporting an SHR in an RAT provided by an embodiment of the present disclosure;
FIG. 8 is a structural schematic diagram of a communication device provided by an embodiment of the present disclosure;
FIG. 9 is a structural schematic diagram of a communication device provided by an embodiment of the present disclosure;
FIG. 10 is a structural schematic diagram of a chip provided by an embodiment of the present disclosure.

### DETAILED DESCRIPTION

In order to better understand the method and device for recording and reporting an SHR in an RAT disclosed in an embodiment of the present disclosure, the communication system to which the embodiment of the present disclosure is applicable is first described below.

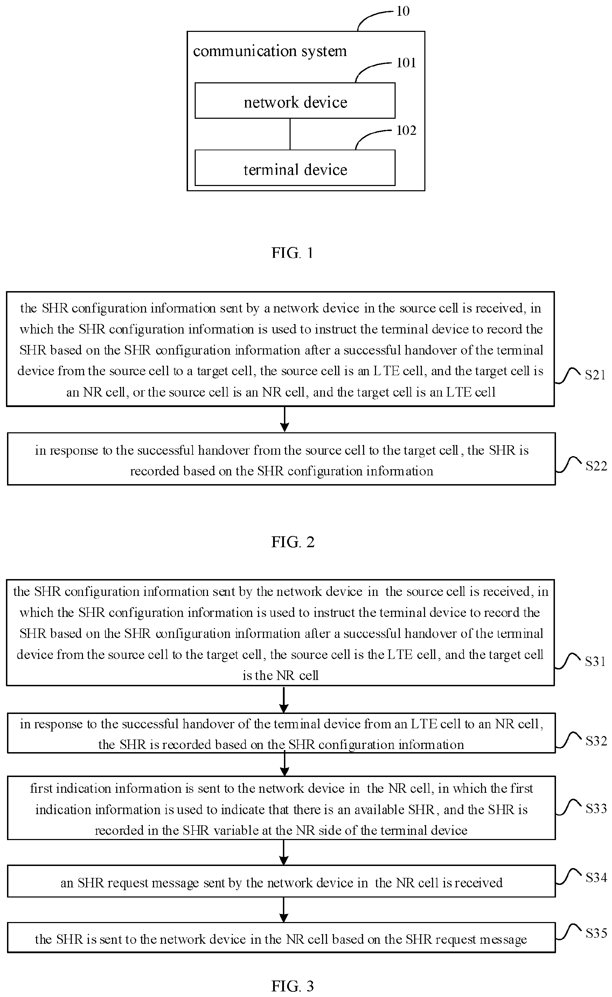

FIG. 1 is a schematic diagram of the architecture of a communication system provided by an embodiment of the present disclosure. The communication system may include, but is not limited to, a network device and a terminal device. The number and form of the devices shown in FIG. 1 are only used as examples and do not constitute a limitation on the embodiments of the present disclosure. In actual applications, there are two or more network devices and two or more terminal devices. The communication system 10 shown in FIG. 1 includes, for example, a network device 101 and a terminal device 102.

It should be noted that the technical solution of an embodiment of the present disclosure can be applied to various communication systems. For example: long term evolution (LTE) system, fifth generation (5G) mobile communication system, 5G new radio (NR) system, or other future new mobile communication systems. It should also be noted that the side link in the embodiment of the present disclosure can also be called a sidelink or a direct link.

The network device 101 in the embodiment of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the base station. The base station provided in the embodiment of the present disclosure may include a central unit (CU) and a distributed unit (DU), the CU may also be referred to as a control unit. The CU-DU structure may be used to split the base station, such as the protocol layer of the base station, and some functions of the protocol layer are placed in the CU for centralized control, and the remaining functions or all functions of the protocol layer are distributed in the DU, and the DU is centrally controlled by the CU.

The terminal device 102 in the embodiment of the present disclosure is an entity on the user side for receiving or transmitting signals, such as a mobile phone. The terminal device may also be referred to as a terminal, user equipment (UE), a mobile station (MS), a mobile terminal (MT), etc. The terminal device may be a car with communication function, a smart car, a mobile phone, a wearable device, a pad, a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The embodiment of the present disclosure does not limit the specific technology and specific device form adopted by the terminal device.

It can be understood that the communication system described in the embodiment of the present disclosure is for the purpose of more clearly illustrating the technical solution of the embodiment of the present disclosure, and does not constitute a limitation on the technical solution provided by the embodiment of the present disclosure. A person skilled in the art can know that with the evolution of the system architecture and the emergence of new business scenarios, the technical solution provided by the embodiment of the present disclosure is also applicable to similar technical problems.

In the related technology, the SHR only supports recording in the scenario of the handover of the terminal device from an NR cell to an NR cell, but does not support recording in the scenario of the handover of the terminal device from an LTE cell to an NR cell, or does not support recording in the scenario of the handover of the terminal device from an NR cell to an LTE cell.

Based on this, in an embodiment of the present disclosure, a method and device for recording and reporting an SHR in an RAT is provided, a terminal device receives SHR configuration information and a handover command sent by a network device in an LTE cell, the handover command instructs the terminal device to hand over from an LTE cell to an NR cell, and when the cell is successfully switched, the terminal device records an SHR of the handover (HO) based on the SHR configuration information, or, the terminal device receives SHR configuration information and a handover command sent by a network device in an NR cell, the handover command instructs the terminal device to switch from an NR cell to an LTE cell, and when the cell is successfully switched, the terminal device records an SHR of the HO based on the SHR configuration information. Thus, it is possible to support recording of an SHR in a scenario where a terminal device switches from an LTE cell to an NR cell, or to support recording of an SHR in a scenario where a terminal device switches from an NR cell to an LTE cell.

A detailed introduction of a method and device for recording and reporting an SHR in an RAT provided by the present disclosure is given in conjunction with the accompanying drawings.

FIG. 2 shows a method for recording and reporting an SHR in an RAT provided by an embodiment of the present disclosure.

As shown in FIG. 2, the method is executed by a terminal device, and the method may include but is not limited to the following step.

S21, the SHR configuration information sent by a network device in the source cell is received, in which the SHR configuration information is used to instruct the terminal device to record the SHR based on the SHR configuration information after a successful handover of the terminal device from the source cell to a target cell, the source cell is an LTE cell, and the target cell is an NR cell, or the source cell is an NR cell, and the target cell is an LTE cell.

In an embodiment of the present disclosure, when the source cell is an LTE cell and the target cell is an NR cell, the terminal device receives, in the LTE cell, a handover command sent by a network device, and the handover command instructs the terminal device to switch from the source cell to the target cell.

It is understandable that the handover command sent by the network device to the terminal device in the LTE cell may be determined and sent based on the measurement result reported by the terminal device in the LTE cell to the network device. The terminal device may establish a wireless link connection with the LTE cell to report, in the LTE cell, the measurement result to the network device, and receive, in the LTE cell, the handover command sent by the network device.

In an embodiment of the present disclosure, a handover command instructs a terminal device to switch from a source cell to a target cell, in which the source cell is an LTE cell, and the target cell is an NR cell. The handover command may carry a target cell identifier, and the target cell identifier may be an NR cell identifier. After receiving the handover command in the LTE cell, the terminal device may determine a target cell (NR cell) to which it is need to switch based on the NR cell identifier to perform cell handover.

In an embodiment of the present disclosure, when the source cell is an NR cell and the target cell is an LTE cell, the terminal device receives, in the NR cell, a handover command sent by a network device, and the handover command instructs the terminal device to switch from the source cell to the target cell.

It can be understood that the handover command sent by the network device to the terminal device in the NR cell may be determined and sent based on the measurement result reported by the terminal device to the network device in the NR cell. The terminal device may establish a wireless link connection with the NR cell to report the measurement result to the network device in the NR cell, and receive, in the NR cell, the handover command sent by the network device.

In an embodiment of the present disclosure, a handover command instructs a terminal device to switch from a source cell to a target cell, in which the source cell is an NR cell and the target cell is an LTE cell. The handover command may carry a target cell identifier, which may be an LTE cell identifier. After receiving the handover command in the NR cell, the terminal device may determine the target cell (LTE cell) to which it needs to switch based on the LTE cell identifier to perform cell handover.

The terminal device receives the SHR configuration information sent by the network device in the source cell, so that when the cell handover (switching from the source cell to the target cell) is successfully completed, it may determine whether to record the SHR based on the SHR configuration information. S22, in response to the successful handover from the source cell to the target cell, the SHR is recorded based on the SHR configuration information.

In an embodiment of the present disclosure, a terminal device may receive a handover command sent by a network device, in which the handover command instructs the terminal device to switch from a source cell to a target cell. When the source cell is an LTE cell and the target cell is an NR cell, and the terminal device successfully switches from the source cell to the target cell, that is, successfully switches from the LTE cell to the NR cell, an SHR is recorded based on the SHR configuration information.

It should be understood that the network device may send a handover command and SHR configuration information to the terminal device respectively, may first send a handover command to the terminal device and then send the SHR configuration information to the terminal device, may first send the SHR configuration information to the terminal device and then send the handover command to the terminal device, or may send a handover command and SHR configuration information to the terminal device at the same time. For example, the network device sends a handover command to the terminal device, and the SHR configuration information may be included in the handover command. The present disclosure does not limit this.

In an embodiment of the present disclosure, a terminal device receives a handover command sent by a network device, and the handover command instructs the terminal device to switch from a source cell to a target cell. When the source cell is an NR cell and the target cell is an LTE cell, and the terminal device successfully switches from the source cell to the target cell, that is, successfully switches from the NR cell to the LTE cell, an SHR is recorded based on the SHR configuration information.

The SHR configuration information includes trigger conditions. The terminal device records the SHR based on the SHR configuration information. When the trigger conditions indicated by the SHR configuration information are met, it may be determined to record the SHR. When the trigger conditions indicated by the SHR configuration information are not met, it may be determined not to record the SHR.

Exemplarily, the trigger condition may be a trigger threshold of a T304 timer, a trigger threshold of a T310 timer, a trigger threshold of a T312 timer, and so on.

The trigger condition may also be other conditions other than the above examples, and may be set as needed, and the embodiments of the present disclosure do not limit it.

By implementing an embodiment of the present disclosure, the terminal device receives the SHR configuration information sent by the network device in the source cell, the SHR configuration information is used to instruct the terminal device to record the SHR based on the SHR configuration information after successfully switching from the source cell to the target cell, the source cell is an LTE cell, and the target cell is an NR cell, or the source cell is an NR cell and the target cell is an LTE cell, and in response to successful handover from the source cell to the target cell, the SHR is recorded based on the SHR configuration information. Thus, the terminal device supports receiving, in the LTE cell, the SHR configuration information configured by the network device, and supports the recording of the SHR in the scenario of switching from the LTE cell to the NR cell, or supports the recording of the SHR in the scenario of switching from the NR cell to the LTE cell.

In some embodiments, recording the SHR based on the SHR configuration information includes: determining whether to trigger recording of the SHR based on the SHR configuration information; in response to determining to trigger the recording of the SHR based on the SHR configuration information, recording the SHR.

In an embodiment of the present disclosure, the terminal device determines whether to trigger recording of an SHR based on the SHR configuration information; in response to determining that recording of an SHR is triggered based on the SHR configuration information, the terminal device records the SHR. If the triggering condition indicated by the SHR configuration information is met, it is determined to record the SHR, and if the triggering condition indicated by the SHR configuration information is not met, it is determined not to record the SHR.

In some embodiments, the SHR configuration information includes a first threshold value of a timer, and a configured duration of the timer in the source cell is a second threshold value; determining whether to trigger recording of the SHR based on the SHR configuration information includes: in response to the terminal device in the source cell, a ratio of an elapsed time of the timer to the second threshold value is greater than the first threshold value, triggering the recording of the SHR.

In an embodiment of the present disclosure, the SHR configuration information includes a first threshold value of the timer, the configured duration of the timer in the source cell (i.e., the LTE cell) is a second threshold value, and the terminal device records an SHR based on the SHR configuration information. When the terminal device is in the source cell and the ratio of the elapsed time of the timer to the second threshold value is greater than the first threshold value, the recording of the SHR is triggered.

When the terminal device is in the source cell and the ratio of the elapsed time of the timer to the second threshold value is not greater than (less than or equal to) the first threshold value, the SHR is not triggered, that is, the SHR is not recorded.

Exemplarily, the SHR configuration information includes a first threshold value of the timer of 0.6, a configured duration of the timer in the source cell is a second threshold value, the second threshold value is 500 ms (milliseconds), the terminal device is in the source cell, the elapsed time of the timer is 400 ms, and the ratio of the elapsed time to the second threshold value is 0.8. When the ratio is 0.8, which is greater than the first threshold value of 0.6, the terminal device records an SHR.

Exemplarily, the SHR configuration information includes a first threshold value of the timer of 0.6, a configured duration of the timer in the source cell is a second threshold value, the second threshold value is 500 ms (milliseconds), and the terminal device in the source cell. The elapsed time of the timer is 200 ms, and the ratio of the elapsed time to the second threshold value is 0.4. When the ratio is 0.4, which is less than the first threshold value of 0.6, the terminal device does not record an SHR.

It should be noted that the above examples are only for illustration and are not intended to be a specific limitation on the embodiments of the present disclosure. Different values of the first threshold value and the second threshold value may be set according to the timer.

In some embodiments, the timer includes at least one of:
T304;
T310; or
T312.

In an embodiment of the present disclosure, the SHR configuration information includes a first threshold value of T304, the configured duration of T304 in the source cell is a second threshold value, and the terminal device records an SHR based on the SHR configuration information. When the terminal device is in the source cell, the ratio of the elapsed time of T304 to the second threshold value is greater than the first threshold value, the recording of the SHR is triggered.

When the terminal device is in the source cell and the ratio of the elapsed time of T304 to the second threshold value is not greater than (less than or equal to) the first threshold value, the SHR is not triggered, that is, the SHR is not recorded.

In an embodiment of the present disclosure, the SHR configuration information includes a first threshold value of T310, the configured duration of T310 in the source cell is a second threshold value, and the terminal device records an SHR based on the SHR configuration information. When the terminal device is in the source cell, the ratio of the elapsed time of T310 to the second threshold value is greater than the first threshold value, the recording of the SHR is triggered.

When the terminal device is in the source cell and the ratio of the elapsed time of T310 to the second threshold value is not greater than (less than or equal to) the first threshold value, the SHR is not triggered, that is, the SHR is not recorded.

In an embodiment of the present disclosure, the SHR configuration information includes a first threshold value of T312, the configured duration of T312 in the source cell is a second threshold value, and the terminal device records an SHR based on the SHR configuration information. When the terminal device is in the source cell, and the ratio of the elapsed time of T312 to the second threshold value is greater than the first threshold value, the recording of the SHR is triggered.

When the terminal device is in the source cell and the ratio of the elapsed time of T312 to the second threshold value is not greater than (less than or equal to) the first threshold value, the SHR is not triggered, that is, the SHR is not recorded.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In some embodiments, the SHR includes a triggering reason, and also includes: recording, by the terminal device, the triggering reason as the timer according to the timer for triggering the recording of SHR.

In an embodiment of the present disclosure, the terminal device records an SHR, which includes a triggering reason. When the SHR configuration information includes a first threshold value of a timer, if the terminal device triggers recording of the SHR based on the SHR configuration information, and the terminal device is in a source cell, a ratio of an elapsed time of the timer to a second threshold value is greater than the first threshold value, and the recording of the SHR is triggered, the triggering reason in the SHR recorded by the terminal device is the timer.

Exemplarily, the SHR configuration information includes a first threshold value of T304 that is 0.6, a configured duration of T304 in the source cell is a second threshold value that is 500ms, the terminal device is in the source cell, an elapsed time of T304 is 400ms, and a ratio of the elapsed time to the second threshold value is 0.8. When the ratio of 0.8 is greater than the first threshold value of 0.6, the terminal device records an SHR and records the handover reason as the T304 timer in the SHR.

It should be noted that the above examples are only for illustration and are not intended to be specific limitations on the embodiments of the present disclosure. The timer may also be other timers, etc.

In some embodiments, the source cell is an LTE cell, the SHR includes first information of the source cell, and the first information includes at least one of:
an ID of the source cell;
a cell-level reference signal received power (RSRP) of the source cell;
a cell-level reference signal received quality (RSRQ) of the source cell; or
a cell-level signal to interference plus noise ratio (SINR) of the source cell.

In an embodiment of the present disclosure, when the terminal device successfully switches from the source cell (LTE cell) to the target cell (NR cell), an SHR is recorded based on the SHR configuration information, the first information of the source cell is recorded in the SHR, and the first information is the ID of the source cell.

In an embodiment of the present disclosure, when the terminal device successfully switches from the source cell (LTE cell) to the target cell (NR cell), an SHR is recorded based on the SHR configuration. The first information of the source cell is recorded in the SHR. The first information is the cell-level RSRP of the source cell.

In an embodiment of the present disclosure, when the terminal device successfully switches from the source cell (LTE cell) to the target cell (NR cell), an SHR is recorded based on the SHR configuration. The first information of the source cell is recorded in the SHR. The first information is the cell-level RSRQ of the source cell.

In an embodiment of the present disclosure, when the terminal device successfully switches from the source cell (LTE cell) to the target cell (NR cell), an SHR is recorded based on the SHR configuration. The first information of the source cell is recorded in the SHR. The first information is the cell-level SINR of the source cell.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In some embodiments, the target cell is an LTE cell, the SHR includes second information of the target cell, and the second information includes at least one of:
an ID of the target cell;
a cell-level RSRP of the target cell;
a cell-level RSRQ of the target cell; or
a cell-level SINR of the target cell.

In an embodiment of the present disclosure, when the terminal device successfully switches from the source cell (NR cell) to the target cell (LTE cell), an SHR is recorded based on the SHR configuration information, the second information of the target cell is recorded in the SHR, and the second information is the ID of the target cell.

In an embodiment of the present disclosure, when the terminal device successfully switches from the source cell (NR cell) to the target cell (LTE cell), an SHR is recorded based on the SHR configuration information, the second information of the target cell is recorded in the SHR, and the second information is the cell-level RSRP of the target cell.

In an embodiment of the present disclosure, when the terminal device successfully switches from the source cell (NR cell) to the target cell (LTE cell), an SHR is recorded based on the SHR configuration information, the second information of the target cell is recorded in the SHR, and the second information is the cell-level RSRQ of the target cell.

In an embodiment of the present disclosure, when the terminal device successfully switches from the source cell (NR cell) to the target cell (LTE cell), an SHR is recorded based on the SHR configuration information, the second information of the target cell is recorded in the SHR, and the second information is the cell-level SINR of the target cell.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In some embodiments, the source cell is an NR cell, the SHR includes third information of the source cell, and the third information includes at least one of:
an ID of the source cell;
a cell-level RSRP of the source cell;
a cell-level RSRQ of the source cell;
a cell-level SINR of the source cell;
RSRP of each synchronization signal block (SSB) of the source cell;
RSRQ of each SSB of the source cell;
SINR of each SSB of the source cell;
RSRP of each channel state information reference signal (CSI-RS) of the source cell;
RSRQ of each CSI-RS of the source cell; or
SINR of each CSI-RS of the source cell.

In an embodiment of the present disclosure, when the terminal device successfully switches from the source cell (NR cell) to the target cell (LTE cell), an SHR is recorded based on the SHR configuration information, the third information of the source cell is recorded in the SHR, and the third information is the ID of the source cell.

In an embodiment of the present disclosure, when the terminal device successfully switches from the source cell (NR cell) to the target cell (LTE cell), an SHR is recorded based on the SHR configuration information, the third information of the source cell is recorded in the SHR, and the third information is the cell-level RSRP of the source cell.

In an embodiment of the present disclosure, when the terminal device successfully switches from the source cell (NR cell) to the target cell (LTE cell), an SHR is recorded based on the SHR configuration information, the third information of the source cell is recorded in the SHR, and the third information is the cell-level RSRQ of the source cell.

In an embodiment of the present disclosure, when the terminal device successfully switches from the source cell (NR cell) to the target cell (LTE cell), an SHR is recorded based on the SHR configuration information, the third information of the source cell is recorded in the SHR, and the third information is the cell-level SINR of the source cell.

In an embodiment of the present disclosure, when the terminal device successfully switches from the source cell (NR cell) to the target cell (LTE cell), an SHR is recorded based on the SHR configuration information, the third information of the source cell is recorded in the SHR, and the third information is the RSRP of each SSB of the source cell.

In an embodiment of the present disclosure, when the terminal device successfully switches from the source cell (NR cell) to the target cell (LTE cell), an SHR is recorded based on the SHR configuration information, the third information of the source cell is recorded in the SHR, and the third information is the RSRQ of each SSB of the source cell.

In an embodiment of the present disclosure, when the terminal device successfully switches from the source cell (NR cell) to the target cell (LTE cell), an SHR is recorded based on the SHR configuration information, the third information of the source cell is recorded in the SHR, and the third information is the SINR of each SSB of the source cell.

In an embodiment of the present disclosure, when the terminal device successfully switches from the source cell (NR cell) to the target cell (LTE cell), an SHR is recorded based on the SHR configuration information, and the third information of the source cell is recorded in the SHR. The third information is the RSRP of each CSI-RS of the source cell.

In an embodiment of the present disclosure, when the terminal device successfully switches from the source cell (NR cell) to the target cell (LTE cell), an SHR is recorded based on the SHR configuration, and the third information of the source cell is recorded in the SHR, and the third information is the RSRQ of each CSI-RS of the source cell.

In an embodiment of the present disclosure, when the terminal device successfully switches from the source cell (NR cell) to the target cell (LTE cell), an SHR is recorded based on the SHR configuration information. The third information of the source cell is recorded in the SHR. The third information is the SINR of each CSI-RS of the source cell.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In some embodiments, the target cell is an NR cell, and the successful handover report includes fourth information of the target cell, in which the fourth information includes at least one of the following:
an ID of the target cell;
a cell-level RSRP of the target cell;
a cell-level RSRQ of the target cell;
a cell-level SINR of the target cell;
RSRP of each SSB of the target cell;
RSRQ of each SSB of the target cell;
SINR of each SSB of the target cell;
RSRP of each CSI-RS of the target cell;
RSRQ of each CSI-RS of the target cell; or
SINR of each CSI-RS of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the SINR of each CSI-RS of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the cell-level RSRP of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the cell-level RSRQ of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the cell-level SINR of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the RSRP of each SSB of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the RSRQ of each SSB of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the SINR of each SSB of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the RSRP of each CSI-RS of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the RSRQ of each CSI-RS of the target cell.

In an embodiment of the present disclosure, when the terminal device successfully switches from the source cell (LTE cell) to the target cell (NR cell), an SHR is recorded based on the SHR configuration information, the fourth information of the target cell is recorded in the SHR, and the fourth information is the SINR of each CSI-RS of the target cell.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In some embodiments, the SHR is recorded in an SHR variable at an NR side of the terminal device.

In an embodiment of the present disclosure, when the terminal device successfully switches from the source cell (LTE cell) to the target cell (NR cell), an SHR is recorded based on the SHR configuration, and the SHR may be recorded in the SHR variable (VarSuccessHO-Report) at the NR side of the terminal device.

In an embodiment of the present disclosure, when the terminal device successfully switches from the source cell (NR cell) to the target cell (LTE cell), an SHR is recorded based on the SHR configuration, and the SHR may be recorded in the SHR variable (VarSuccessHO-Report) at the NR side of the terminal device.

In some embodiments, the SHR is recorded in an SHR variable at a corresponding target cell side.

In an embodiment of the present disclosure, when the terminal device successfully switches from the source cell (LTE cell) to the target cell (NR cell), an SHR is recorded based on the SHR configuration, and the SHR may be recorded in the SHR variable (VarSuccessHO-Report) at the NR side of the terminal device.

In an embodiment of the present disclosure, when the terminal device successfully switches from the source cell (NR cell) to the target cell (LTE cell), an SHR is recorded based on the SHR configuration, and the SHR may be recorded in the SHR variable at the LTE side of the terminal device.

In some embodiments, the target cell is an NR cell, and the terminal device sends first indication information to the network device in the NR cell in response to the SHR being recorded at the NR side, in which the first indication information is used to indicate that there is an available SHR.

In an embodiment of the present disclosure, when an SHR is recorded at the NR side of the terminal device, the terminal device sends a first indication message to the network device in the NR cell, and the first indication message indicates that there is an available SHR, so as to inform the network device that there is an available SHR.

The SHR is recorded at the NR side of the terminal device. When the terminal device successfully switches from the source cell (LTE cell) to the target cell (NR cell), the SHR is recorded based on the SHR configuration, and the SHR is recorded in the SHR variable at the corresponding target cell side (NR cell).

The SHR is recorded at the NR side of the terminal device. When the terminal device successfully switches from the source cell (NR cell) to the target cell (LTE cell), the SHR is recorded based on the SHR configuration, and the SHR is recorded in the SHR variable on at the NR side of the terminal device.

In some embodiments, the target cell is an LTE cell, and the terminal device sends second indication information to the network device in the NR cell in response to the SHR being recorded on the NR side, in which the second indication information is used to indicate that there is an available SHR.

In an embodiment of the present disclosure, when an SHR is recorded at the NR side of the terminal device, the terminal device sends a second indication message to the network device in the NR cell, and the second indication message indicates that there is an available SHR, so as to inform the network device that there is an available SHR.

The SHR is recorded at the NR side of the terminal device. When the terminal device successfully switches from the source cell (NR cell) to the target cell (LTE cell), the SHR is recorded based on the SHR configuration, and the SHR is recorded in the SHR variable at the NR side of the terminal device.

In some embodiments, the target cell is an LTE cell, and the terminal device sends third indication information to the network device in the LTE cell in response to the SHR being recorded on the LTE side, in which the third indication information is used to indicate that there is an available SHR.

In an embodiment of the present disclosure, when an SHR is recorded on the LTE side of the terminal device, the terminal device sends a third indication message to the network device in the LTE cell, and the third indication message indicates that there is an available SHR to inform the network device that there is an available SHR.

The SHR is recorded at the LTE side of the terminal device. When the terminal device successfully switches from the source cell (NR cell) to the target cell (LTE cell), the SHR is recorded based on the SHR configuration, and the SHR is recorded in the SHR variable at the corresponding target cell side (LTE cell).

In some embodiments, at least one of the first indication information, the second indication information, and the third indication information includes at least one of:
a Radio Resource Control (RRC) reconfiguration complete message;
an RRC re-establishment complete message;
an RRC establishment complete message;
an RRC recovery complete message.

In the embodiment of the present disclosure, the first indication information is an RRC reconfiguration completion message.

In the embodiment of the present disclosure, the first indication information is an RRC reconstruction completion message.

In the embodiment of the present disclosure, the first indication information is an RRC establishment completion message.

In an embodiment of the present disclosure, the first indication information is an RRC recovery completion message.

In the embodiment of the present disclosure, the second indication information is an RRC reconfiguration completion message.

In an embodiment of the present disclosure, the second indication information is an RRC reconstruction completion message.

In the embodiment of the present disclosure, the second indication information is an RRC establishment completion message.

In an embodiment of the present disclosure, the second indication information is an RRC recovery completion message.

In an embodiment of the present disclosure, the third indication information is an RRC reconfiguration completion message.

In an embodiment of the present disclosure, the third indication information is an RRC reconstruction completion message.

In the embodiment of the present disclosure, the third indication information is an RRC establishment completion message.

In an embodiment of the present disclosure, the third indication information is an RRC recovery completion message.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In some embodiments, the terminal device receives an SHR request message sent by a network device in the NR cell; and sends an SHR to the network device in the NR cell based on the SHR request message.

In an embodiment of the present disclosure, when the terminal device successfully switches from the source cell (LTE cell) to the target cell (NR cell), and the SHR is recorded in the SHR variable at the NR side of the terminal device, or when the SHR is recorded in the SHR variable at the corresponding target cell side (NR cell), the terminal device may send, in the NR cell, first indication information to the network device, the first indication information is used to indicate that there is an available SHR. The network device receives the first indication information sent by the terminal device in the NR cell, determines that there is an available SHR, and sends, in the NR cell, an SHR request message to the terminal device to request the SHR, so as to request the terminal device to send an SHR to the network device.

The request message may be a UE information request.

In addition, when the terminal device receives the SHR request message sent by the network device in the NR cell, the SHR may be sent to the network device in the NR cell.

The terminal device may send a UE information response to the network device in the NR cell to send an SHR to the network device.

In some embodiments, the terminal device receives, in the LTE cell, an SHR request message sent by a network device; and sends an SHR to the network device in the LTE cell based on the SHR request message.

In an embodiment of the present disclosure, when the terminal device successfully switches from the source cell (NR cell) to the target cell (LTE cell), and the SHR is recorded in the SHR variable at the NR side of the terminal device, the second indication information may be sent to the network device in the LTE cell, and the second indication information is used to indicate that there is an available SHR. The network device receives, in the LTE cell, the second indication information sent by the terminal device, determines that there is an available SHR, and sends an SHR request message to the terminal device in the LTE cell to request the SHR, so as to request the terminal device to send an SHR to the network device.

In an embodiment of the present disclosure, when the terminal device successfully switches from the source cell (NR cell) to the target cell (LTE cell), and the SHR is recorded in the SHR variable at the corresponding target cell side (LTE cell), the terminal device may send, in the LTE cell, a third indication information to the network device, the third indication information is used to indicate that there is an available SHR. The network device receives the third indication information sent by the terminal device in the LTE cell, determines that there is an available SHR, and sends an SHR request message to the terminal device in the LTE cell to request the SHR, so as to request the terminal device to send an SHR to the network device.

The request message may be a UE information request.

In addition, when the terminal device receives the SHR request message sent by the network device in the LTE cell, it may send, in the NR cell, an SHR to the network device.

The terminal device may send a UE information response to the network device in the LTE cell to send an SHR to the network device.

It may be understood that when the source cell is an LTE cell and the target cell is an NR cell, the handover command includes an SHR configuration, and the SHR configuration does not carry the source dual activation protocol stack failure request sourceDAPS-FailureReporting field to avoid configuration errors.

Of course, if the source DAPS-FailureReporting field is carried in the SHR configuration, the terminal device may ignore the source DAPS-FailureReporting field in the SHR configuration information of the handover command.

In an embodiment of the present disclosure, a terminal device receives, in a LTE cell, a handover command sent by a network device. The handover command instructs the terminal device to switch from the LTE cell to the NR cell. The terminal device ignores the source dual activation protocol stack failure request sourceDAPS-FailureReporting field in the SHR configuration information of the handover command and switches from the LTE cell to the NR cell.

FIG. 3 is a flow chart of a method for recording and reporting an SHR in an RAT provided by an embodiment of the present disclosure.

As shown in FIG. 3, the method is executed by a terminal device, and the method may include but is not limited to the following steps.

S31, the SHR configuration information sent by the network device in the source cell is received, in which the SHR configuration information is used to instruct the terminal device to record the SHR based on the SHR configuration information after a successful handover of the terminal device from the source cell to the target cell, the source cell is the LTE cell, and the target cell is the NR cell.

In an embodiment of the present disclosure, the source cell is an LTE cell, the target cell is an NR cell, and the terminal device receives, in the LTE cell, a handover command sent by a network device, and the handover command instructs the terminal device to switch from the LTE cell to the NR cell.

It is understandable that the handover command sent by the network device to the terminal device in the LTE cell may be determined and sent based on the measurement result reported by the terminal device to the network device in the LTE cell. The terminal device may establish a wireless link connection with the LTE cell to report the measurement result to the network device in the LTE cell, and receive the handover command sent by the network device in the LTE cell.

In an embodiment of the present disclosure, a handover command instructs a terminal device to switch from an LTE cell to an NR cell, the handover command may carry a target cell identifier, which may be an NR cell identifier. After receiving the handover command in the NR cell, the terminal device may determine the NR cell to which it needs to switch based on the NR cell identifier to perform cell switching.

The terminal device receives, in the LTE cell, the SHR configuration information sent by the network device, so that when the cell handover is successfully completed (switching from the LTE cell to the NR cell), it may determine whether to record the SHR based on the SHR configuration information.

S32, in response to the successful handover of the terminal device from an LTE cell to an NR cell, the SHR is recorded based on the SHR configuration information.

In an embodiment of the present disclosure, the terminal device successfully switches from the LTE cell to the NR cell, and records an SHR based on the SHR configuration information.

The relevant description of the SHR configuration information and the method for recording an SHR based on the SHR configuration information may be found in the relevant description of the above embodiment, which will not be repeated here.

In some embodiments, the source cell is an LTE cell, and the SHR includes first information of the source cell, in which the first information includes at least one of:
an ID of the source cell;
a cell-level RSRP of the source cell;
a cell-level RSRQ of the source cell; or
a cell-level SINR of the source cell.

In some embodiments, the target cell is an NR cell, and the SHR includes fourth information of the target cell, in which the fourth information includes at least one of:
an ID of the target cell;
a cell-level RSRP of the target cell;
a cell-level RSRQ of the target cell;
a cell-level SINR of the target cell;
RSRP of each SSB of the target cell;
RSRQ of each SSB of the target cell;
SINR of each SSB of the target cell;
RSRP of each CSI-RS of the target cell;
RSRQ of each CSI-RS of the target cell; or
SINR of each CSI-RS of the target cell.

The relevant descriptions of the first information and the fourth information may refer to the relevant descriptions in the above embodiments, and will not be repeated here.

S33, first indication information is sent to the network device in the NR cell, in which the first indication information is used to indicate that there is an available SHR, and the SHR is recorded in the SHR variable at the NR side of the terminal device.

In the embodiment of the present disclosure, when the terminal device successfully switches from the LTE cell to the NR cell and records an SHR, a first indication message is sent to the network device in the NR cell. The first indication message is used to indicate that there is an available SHR, so as to inform the network device that there is an available SHR.

The SHR is recorded at the NR side of the terminal device. When the terminal device successfully switches from the source cell (LTE cell) to the target cell (NR cell), the SHR is recorded based on the SHR configuration, and the SHR is recorded in the SHR variable at the corresponding target cell side (NR cell).

The relevant description of the first indication information may refer to the relevant description in the above embodiment, and will not be repeated here.

S34, an SHR request message sent by the network device in the NR cell is received.

S35, the SHR is sent to the network device in the NR cell based on the SHR request message.

In an embodiment of the present disclosure, when the terminal device successfully switches from the source cell (LTE cell) to the target cell (NR cell), and the SHR is recorded in the SHR variable at the NR side of the terminal device, or when the SHR is recorded in the SHR variable at the corresponding target cell side (NR cell), the terminal device may send first indication information to the network device in the NR cell, the first indication information is used to indicate that there is an available SHR. The network device receives, in the NR cell, the first indication information sent by the terminal device, determines that there is an available SHR, and sends an SHR request message to the terminal device in the NR cell to request the SHR, so as to request the terminal device to send an SHR to the network device.

The request message may be a UE information request.

In addition, when the terminal device receives the SHR request message sent by the network device in the NR cell, it may send an SHR to the network device in the NR cell.

The terminal device may send a UE information response to the network device in the NR cell to send an SHR to the network device.

In some embodiments, when the source cell is an LTE cell and the target cell is an NR cell, the terminal device ignores the sourceDAPS-FailureReporting field in the SHR configuration information of the handover command.

In an embodiment of the present disclosure, a terminal device receives, in the LTE cell, a handover command sent by a network device. The handover command instructs the terminal device to switch from the LTE cell to the NR cell. The terminal device ignores the sourceDAPS - FailureReporting field in the SHR configuration information of the handover command and switches from the LTE cell to the NR cell.

In an embodiment of the present disclosure, the terminal device receives the SHR configuration information sent by the network device in the source cell, the SHR configuration information is used to instruct the terminal device to record the SHR based on the SHR configuration information after a successful handover of the terminal device from the source cell to a target cell, the source cell is a long term evolution (LTE) cell, and the target cell is a new radio (NR) cell; in response to the successful handover of the terminal device from the LTE cell to the NR cell, the SHR is recorded based on the SHR configuration information; the first indication information is sent to the network device in the NR cell, the first indication information is used to indicate that there is an available SHR, and the SHR is recorded in the SHR variable at the NR side of the terminal device; the SHR request message sent by the network device is received in the NR cell; the SHR is sent to the network device in the NR cell according to the SHR request message. As a result, the terminal device supports receiving the SHR configuration configured by the network device in the LTE cell, supports recording the SHR in the case of switching from the LTE cell to the NR cell, and supports reporting the SHR from the LTE cell to the NR cell to the network device.

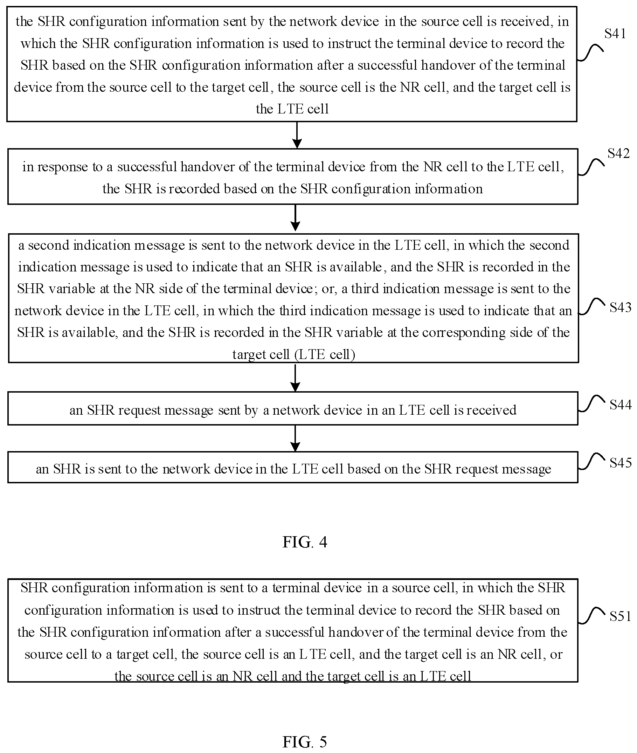

FIG. 4 is a flow chart of a method for recording and reporting an SHR in an RAT provided by an embodiment of the present disclosure.

As shown in FIG. 4, the method is executed by a terminal device, and the method may include but is not limited to the following steps.

S41, the SHR configuration information sent by the network device in the source cell is received, in which the SHR configuration information is used to instruct the terminal device to record the SHR based on the SHR configuration information after a successful handover of the terminal device from the source cell to the target cell, the source cell is the NR cell, and the target cell is the LTE cell.

In an embodiment of the present disclosure, when the source cell is an NR cell and the target cell is an LTE cell, the terminal device receives, in the NR cell, a handover command sent by a network device, and the handover command instructs the terminal device to switch from the source cell to the target cell.

It may be understood that the handover command sent by the network device to the terminal device in the NR cell may be determined and sent based on the measurement result reported by the terminal device to the network device in the NR cell. The terminal device may establish a wireless link connection with the NR cell to report the measurement result to the network device in the NR cell, and receive, in the NR cell, the handover command sent by the network device.

In an embodiment of the present disclosure, a handover command instructs a terminal device to switch from a source cell to a target cell, the source cell is an NR cell and the target cell is an LTE cell. The handover command may carry a target cell identifier, which may be an LTE cell identifier. After receiving the handover command in the NR cell, the terminal device may determine the target cell (LTE cell) to which it needs to switch based on the LTE cell identifier to perform cell handover.

The terminal device receives the SHR configuration information sent by the network device in the source cell, so that when the cell switching is successfully completed (switching from the source cell to the target cell), it may determine whether to record the SHR based on the SHR configuration information.

S42, in response to a successful handover of the terminal device from the NR cell to the LTE cell, the SHR is recorded based on the SHR configuration information.

In an embodiment of the present disclosure, when the source cell is an NR cell and the target cell is an LTE cell, and the terminal device successfully switches from the source cell to the target cell, that is, successfully switches from the NR cell to the LTE cell, an SHR is recorded based on the SHR configuration information.

The relevant description of the SHR configuration information and the method for recording an SHR based on the SHR configuration information may be found in the relevant description of the above embodiment, which will not be repeated here.

In some embodiments, the source cell is an NR cell, and the SHR includes third information of the source cell, and the third information includes at least one of:
an ID of the source cell;
a cell-level RSRP of the source cell;
a cell-level RSRQ of the source cell;
a cell-level SINR of the source cell;
RSRP of each synchronization signal block (SSB) of the source cell;
RSRQ of each SSB of the source cell;
SINR of each SSB of the source cell;
RSRP of each channel state information reference signal (CSI-RS) of the source cell;
RSRQ of each CSI-RS of the source cell; or
SINR of each CSI-RS of the source cell.

In some embodiments, the target cell is an LTE cell, and the SHR includes second information of the target cell, and the second information includes at least one of:
an ID of the target cell;
a cell-level RSRP of the target cell;
a cell-level RSRQ of the target cell; or
a cell-level SINR of the target cell.

For the related description of the third information and the second information, reference may be made to the related description in the above embodiment, which will not be repeated here.

S43, a second indication message is sent to the network device in the LTE cell, in which the second indication message is used to indicate that an SHR is available, and the SHR is recorded in the SHR variable at the NR side of the terminal device; or, a third indication message is sent to the network device in the LTE cell, in which the third indication message is used to indicate that an SHR is available, and the SHR is recorded in the SHR variable at the corresponding target cell side (LTE cell).

In an embodiment of the present disclosure, when the terminal device successfully switches from the source cell (NR cell) to the target cell (LTE cell), an SHR is recorded. The SHR may be recorded in an SHR variable (VarSuccessHO-Report) at the NR side of the terminal device.

In an embodiment of the present disclosure, when an SHR is recorded at the NR side of the terminal device, the terminal device sends a second indication message to the network device in the NR cell, and the second indication message indicates that there is an available SHR, so as to inform the network device that there is an available SHR.

The SHR is recorded at the NR side of the terminal device. The SHR may be recorded for the terminal device when it successfully switches from the source cell (NR cell) to the target cell (LTE cell), and the SHR is recorded in the SHR variable at the NR side of the terminal device.

In an embodiment of the present disclosure, when the terminal device successfully switches from the source cell (NR cell) to the target cell (LTE cell), an SHR is recorded, and the SHR may be recorded in an SHR variable at the LTE side of the terminal device.

In an embodiment of the present disclosure, when an SHR is recorded at the LTE side of the terminal device, the terminal device sends a third indication message to the network device in the LTE cell, and the third indication message indicates that there is an available SHR to inform the network device that there is an available SHR.

The SHR is recorded at the LTE side of the terminal device. When the terminal device successfully switches from the source cell (NR cell) to the target cell (LTE cell), an SHR may be recorded, and the SHR may be recorded in the SHR variable at the corresponding target cell side (LTE cell).

For the relevant description of the second indication information and the third indication information, reference may be made to the relevant description in the above embodiment, which will not be repeated here.

S44, an SHR request message sent by a network device in an LTE cell is received.

S45, an SHR is sent to the network device in the LTE cell based on the SHR request message.

In an embodiment of the present disclosure, when the terminal device successfully switches from the source cell (NR cell) to the target cell (LTE cell), and the SHR is recorded in the SHR variable at the NR side of the terminal device, the second indication information may be sent to the network device in the LTE cell, in which the second indication information is used to indicate that there is an available SHR. The network device receives, in the LTE cell, the second indication information sent by the terminal device, determines that there is an available SHR, and sends an SHR request message to the terminal device in the LTE cell to request the SHR, so as to request the terminal device to send an SHR to the network device.

In an embodiment of the present disclosure, when the terminal device successfully switches from the source cell (NR cell) to the target cell (LTE cell), and the SHR is recorded in the SHR variable at the corresponding target cell side (LTE cell), the terminal device may send a third indication information to the network device in the LTE cell, in which the third indication information is used to indicate that there is an available SHR. The network device receives, in the LTE cell, the third indication information sent by the terminal device, determines that there is an available SHR, and sends an SHR request message to the terminal device in the LTE cell to request the SHR, so as to request the terminal device to send an SHR to the network device.

The request message may be a UE information request.

In addition, when the terminal device receives the SHR request message sent by the network device in the LTE cell, it may send an SHR to the network device in the NR cell.

The terminal device may send a UE information response to the network device in the LTE cell to send an SHR to the network device.

Through the embodiments of the present disclosure, a terminal device receives an SHR configuration information sent by a network device in a source cell, in which the SHR configuration information is used to instruct the terminal device to record an SHR based on the SHR configuration information after the successful handover of the terminal device from the source cell to the target cell, the source cell is an NR cell, and the target cell is an LTE cell; in response to successfully switching from the NR cell to the LTE cell, the SHR is recorded based on the SHR configuration information; a second indication information is sent to the network device in the LTE cell, in which the second indication information is used to indicate that an SHR is available, and the SHR is recorded in an SHR variable at the NR side of the terminal device; or, a third indication information is sent to the network device in the LTE cell, in which the third indication information is used to indicate that an SHR is available, and the SHR is recorded in an SHR variable at the corresponding target cell side (LTE cell); an SHR request message sent by the network device is received in the LTE cell; and an SHR is sent to the network device in the LTE cell based on the SHR request message. Therefore, the terminal device supports recording an SHR when switching from an NR cell to an LTE cell, and supports reporting an SHR from an NR cell to an LTE cell to a network device.

FIG. 5 is a flowchart of a method for recording and reporting an SHR in an RAT provided by an embodiment of the present disclosure.

As shown in FIG. 5, the method is performed by a network device, and the method may include but is not limited to the following steps.

S51, SHR configuration information is sent to a terminal device in a source cell, in which the SHR configuration information is used to instruct the terminal device to record the SHR based on the SHR configuration information after a successful handover of the terminal device from the source cell to a target cell, the source cell is an LTE cell, and the target cell is an NR cell, or the source cell is an NR cell and the target cell is an LTE cell.

The terminal device receives the SHR configuration information sent by the network device in the source cell, so that when the cell handover is successfully completed (switching from the source cell to the target cell), it may determine whether to record the SHR based on the SHR configuration information.

In some possible implementations, the method may further include: sending a handover command to the terminal device.

It should be understood that the network device may send a handover command and SHR configuration information to the terminal device respectively, may first send a handover command to the terminal device and then send the SHR configuration information to the terminal device, may first send the SHR configuration information to the terminal device and then send the handover command to the terminal device, or may send a handover command and SHR configuration information to the terminal device at the same time. For example, the network device sends a handover command to the terminal device, and the SHR configuration information may be included in the handover command. The present disclosure does not limit this.

In an embodiment of the present disclosure, a terminal device receives a handover command sent by a network device, and the handover command instructs the terminal device to switch from a source cell to a target cell. When the source cell is an LTE cell and the target cell is an NR cell, and the terminal device successfully switches from the source cell to the target cell, that is, successfully switches from the LTE cell to the NR cell, an SHR is recorded based on the SHR configuration information.

In an embodiment of the present disclosure, a terminal device receives a handover command sent by a network device, and the handover command instructs the terminal device to switch from a source cell to a target cell. When the source cell is an NR cell and the target cell is an LTE cell, and the terminal device successfully switches from the source cell to the target cell, that is, successfully switches from the NR cell to the LTE cell, an SHR is recorded based on the SHR configuration information.

The SHR configuration information includes trigger conditions. The terminal device records the SHR based on the SHR configuration information. When the trigger conditions indicated by the SHR configuration information are met, it may be determined to record the SHR. When the trigger conditions indicated by the SHR configuration information are not met, it may be determined not to record the SHR.

Exemplarily, the trigger condition may be a trigger threshold of a T304 timer, a trigger threshold of a T310 timer, a trigger threshold of a T312 timer, and so on.

Of course, the trigger condition may also be other conditions other than the above examples, and may be set as needed, and the embodiments of the present disclosure do not limit this.

In an embodiment of the present disclosure, when the source cell is an LTE cell and the target cell is an NR cell, the terminal device receives, in the LTE cell, a handover command sent by a network device, and the handover command instructs the terminal device to switch from the source cell to the target cell.

It is understandable that the handover command sent by the network device to the terminal device in the LTE cell may be determined and sent based on the measurement result reported by the terminal device to the network device in the LTE cell. The terminal device may establish a wireless link connection with the LTE cell to report the measurement result to the network device in the LTE cell, and receive the handover command sent by the network device in the LTE cell.

In an embodiment of the present disclosure, a handover command instructs a terminal device to switch from a source cell to a target cell, in which the source cell is an LTE cell, and the target cell is an NR cell. The handover command may carry a target cell identifier, and the target cell identifier may be an NR cell identifier. After receiving the handover command in the LTE cell, the terminal device may determine the target cell (NR cell) to which it need to switch based on the NR cell identifier to perform cell handover.

In an embodiment of the present disclosure, when the source cell is an NR cell and the target cell is an LTE cell, the terminal device receives, in the NR cell, a handover command sent by a network device, and the handover command instructs the terminal device to switch from the source cell to the target cell.

It can be understood that the handover command sent by the network device to the terminal device in the NR cell may be determined and sent based on the measurement result reported by the terminal device to the network device in the NR cell. The terminal device may establish a wireless link connection with the NR cell to report the measurement result to the network device in the NR cell, and receive, in the NR cell, the handover command sent by the network device.

In an embodiment of the present disclosure, a handover command instructs a terminal device to switch from a source cell to a target cell, the source cell is an NR cell and the target cell is an LTE cell. The handover command may carry a target cell identifier, which may be an LTE cell identifier. After receiving the handover command in the NR cell, the terminal device may determine the target cell (LTE cell) to which it needs to switch based on the LTE cell identifier to perform cell handover.

By implementing the embodiments of the present disclosure, the network device sends SHR configuration information to the terminal device in the source cell, the SHR configuration information is used to instruct the terminal device to record an SHR based on the SHR configuration information after successful handover of the cells; the source cell is an LTE cell, and the target cell is an NR cell, or the source cell is an NR cell and the target cell is an LTE cell. Thus, the terminal device supports receiving, in the LTE cell, the SHR configuration information configured by the network device, and supports recording an SHR in the scenario of switching from an LTE cell to an NR cell, or supports recording an SHR in the scenario of switching from an NR cell to an LTE cell.

In the embodiments of the present disclosure, the relevant description of the SHR configuration information may refer to the relevant description in the above embodiments, which will not be repeated here.

In some embodiments, the source cell is the LTE cell, and the SHR includes first information of the source cell, and the first information includes at least one of:
an ID of the source cell;
a cell-level RSRP of the source cell;
a cell-level RSRQ of the source cell; or
a cell-level SINR of the source cell.

In some embodiments, the target cell is the LTE cell, and the SHR includes second information of the target cell, and the second information includes at least one of:
an ID of the target cell;
a cell-level RSRP of the target cell;
a cell-level RSRQ of the target cell; or
a cell-level SINR of the target cell.

In some embodiments, the source cell is the NR cell, and the SHR includes third information of the source cell, and the third information includes at least one of:
an ID of the source cell;
a cell-level RSRP of the source cell;
a cell-level RSRQ of the source cell;
a cell-level SINR of the source cell;
RSRP of each SSB of the source cell;
RSRQ of each SSB of the source cell;
SINR of each SSB of the source cell;
RSRP of each CSI-RS of the source cell;
RSRQ of each CSI-RS of the source cell; or
SINR of each CSI-RS of the source cell.

In some embodiments, the target cell is the NR cell, and the SHR includes fourth information of the target cell, and the fourth information includes at least one of:
an ID of the target cell;
a cell-level RSRP of the target cell;
a cell-level RSRQ of the target cell;
a cell-level SINR of the target cell;
RSRP of each SSB of the target cell;
RSRQ of each SSB of the target cell;
SINR of each SSB of the target cell;
RSRP of each CSI-RS of the target cell;
RSRQ of each CSI-RS of the target cell; or
SINR of each CSI-RS of the target cell.

The relevant descriptions of the first information, the second information, the third information and the fourth information may refer to the relevant descriptions in the above embodiments, and will not be repeated here.

In some embodiments, the SHR is recorded in an SHR variable at an NR side of the terminal device.

In an embodiment of the present disclosure, when the terminal device successfully switches from the source cell (LTE cell) to the target cell (NR cell), an SHR is recorded based on the SHR configuration, and the SHR may be recorded in the SHR variable (VarSuccessHO-Report) at the NR side of the terminal device.

In an embodiment of the present disclosure, when the terminal device successfully switches from the source cell (NR cell) to the target cell (LTE cell), an SHR is recorded based on the SHR configuration, and the SHR may be recorded in the SHR variable (VarSuccessHO-Report) at the NR side of the terminal device.

In some embodiments, the SHR is recorded in an SHR variable at a corresponding target cell side.

In an embodiment of the present disclosure, when the terminal device successfully switches from the source cell (LTE cell) to the target cell (NR cell), an SHR is recorded based on the SHR configuration, and the SHR may be recorded in the SHR variable (VarSuccessHO-Report) at the NR side of the terminal device.

In an embodiment of the present disclosure, when the terminal device successfully switches from the source cell (NR cell) to the target cell (LTE cell), an SHR is recorded based on the SHR configuration, and the SHR may be recorded in the SHR variable at the LTE side of the terminal device.

In some embodiments, the target cell is an NR cell, and the method further includes: receiving first indication information sent by the terminal device in the NR cell in a case that the SHR is recorded at the NR side, in which the first indication information is used to indicate that there is an available SHR.

In an embodiment of the present disclosure, when an SHR is recorded at the NR side of the terminal device, the terminal device sends a first indication message to the network device in the NR cell, and the first indication message indicates that there is an available SHR, so as to inform the network device that there is an available SHR.

The SHR is recorded at the NR side of the terminal device. When the terminal device successfully switches from the source cell (LTE cell) to the target cell (NR cell), the SHR is recorded based on the SHR configuration, and the SHR is recorded in the SHR variable at the corresponding target cell side (NR cell).

The SHR is recorded at the NR side of the terminal device. When the terminal device successfully switches from the source cell (NR cell) to the target cell (LTE cell), the SHR is recorded based on the SHR configuration, and the SHR is recorded in the SHR variable at the NR side of the terminal device.

In some embodiments, the target cell is an LTE cell, the method further includes: receiving second indication information sent by the terminal device in the LTE cell in a case that the SHR is recorded at the NR side, in which the second indication information is used to indicate that there is an available SHR.

In an embodiment of the present disclosure, when an SHR is recorded at the NR side of the terminal device, the terminal device sends a second indication message to the network device in the NR cell, and the second indication message indicates that there is an available SHR, so as to inform the network device that there is an available SHR.

The SHR is recorded at the NR side of the terminal device. When the terminal device successfully switches from the source cell (NR cell) to the target cell (LTE cell), the SHR is recorded based on the SHR configuration, and the SHR is recorded in the SHR variable at the NR side of the terminal device.

In some embodiments, the target cell is an LTE cell, the method further includes: receiving third indication information sent by the terminal device in the LTE cell in a case that the SHR is recorded at an LTE side, in which the third indication information is used to indicate that there is an available SHR.

In an embodiment of the present disclosure, when an SHR is recorded at the LTE side of the terminal device, the terminal device sends a third indication message to the network device in the LTE cell, and the third indication message indicates that there is an available SHR to inform the network device that there is an available SHR.

The SHR is recorded at the LTE side of the terminal device. When the terminal device successfully switches from the source cell (NR cell) to the target cell (LTE cell), the SHR is recorded based on the SHR configuration, and the SHR is recorded in the SHR variable at the corresponding target cell side (LTE cell).

The relevant descriptions of the first indication information, the second indication information, and the third indication information may refer to the relevant descriptions in the above embodiments, and will not be repeated here.

In some embodiments, the network device sends an SHR request message to the terminal device in the NR cell; and receives an SHR sent by the terminal device in the NR cell based on the SHR request message.

In an embodiment of the present disclosure, when the terminal device successfully switches from the source cell (LTE cell) to the target cell (NR cell), and the SHR is recorded in the SHR variable at the NR side of the terminal device, or when the SHR is recorded in the SHR variable at the corresponding target cell side (NR cell), the terminal device may send first indication information to the network device in the NR cell, in which the first indication information is used to indicate that there is an available SHR. The network device receives, in the NR cell, the first indication information sent by the terminal device, determines that there is an available SHR, and sends an SHR request message to the terminal device in the NR cell to request the SHR, so as to request the terminal device to send an SHR to the network device.

The request message may be a UE information request.

In addition, when the terminal device receives the SHR request message sent by the network device in the NR cell, it may send an SHR to the network device in the NR cell.

The terminal device may send a UE information response to the network device in the NR cell to send an SHR to the network device.

In some embodiments, the network device forwards the successful handover report to the LTE cell.

In an embodiment of the present disclosure, when the network device, in the NR cell, receives an SHR sent by a terminal device, the SHR may be forwarded to the source cell (LTE cell).

In some embodiments, the network device sends an SHR request message to the terminal device in the LTE cell; and receives an SHR sent by the terminal device in the LTE cell in response to the SHR request message.

In an embodiment of the present disclosure, when the terminal device successfully switches from the source cell (NR cell) to the target cell (LTE cell), and the SHR is recorded in the SHR variable at the NR side of the terminal device, the second indication information may be sent to the network device in the LTE cell, the second indication information is used to indicate that there is an available SHR. The network device receives, in the LTE cell, the second indication information sent by the terminal device, determines that there is an available SHR, and sends an SHR request message to the terminal device in the LTE cell to request the SHR, so as to request the terminal device to send an SHR to the network device.

In an embodiment of the present disclosure, when the terminal device successfully switches from the source cell (NR cell) to the target cell (LTE cell), and the SHR is recorded in the SHR variable at the corresponding target cell side (LTE cell), the terminal device may send a third indication information to the network device in the LTE cell, and the third indication information is used to indicate that there is an available SHR. The network device receives, in the LTE cell, the third indication information sent by the terminal device, determines that there is an available SHR, and sends an SHR request message to the terminal device in the LTE cell to request the SHR, so as to request the terminal device to send an SHR to the network device.

The request message may be a UE information request.

In addition, when the terminal device receives the SHR request message sent by the network device in the LTE cell, it may send an SHR to the network device in the NR cell.

The terminal device may send a UE information response to the network device in the LTE cell to send an SHR to the network device.

In some embodiments, when the source cell is an LTE cell and the target cell is an NR cell, the terminal device ignores the sourceDAPS-FailureReporting field in the SHR configuration information of the handover command.

In an embodiment of the present disclosure, a terminal device receives, in the LTE cell, a handover command sent by a network device. The handover command instructs the terminal device to switch from the LTE cell to the NR cell. The terminal device ignores the sourceDAPS - FailureReporting field in the SHR configuration information of the handover command and switches from the LTE cell to the NR cell.

In some embodiments, the network device forwards the SHR to the NR cell when the SHR is recorded at the LTE side.

In an embodiment of the present disclosure, a network device receives, in the LTE cell, an SHR sent by a terminal device. When the SHR is recorded at the LTE side, the SHR may be forwarded to a source cell (NR cell).

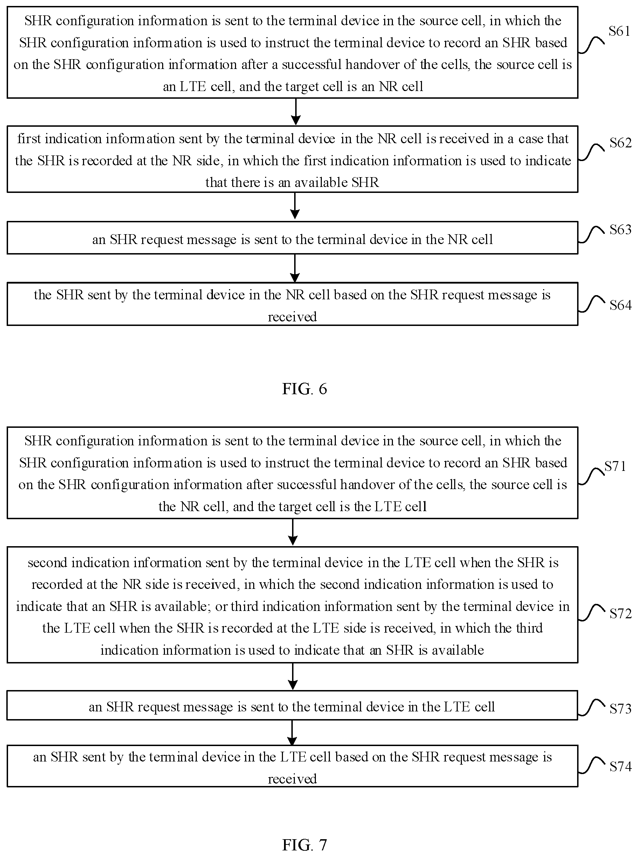

FIG. 6 is a flowchart of a method for recording and reporting an SHR in an RAT provided by an embodiment of the present disclosure.

As shown in FIG. 6, the method is executed by a network device, and the method may include but is not limited to the following steps.

S61, SHR configuration information is sent to the terminal device in the source cell, in which the SHR configuration information is used to instruct the terminal device to record an SHR based on the SHR configuration information after a successful handover of the cells, the source cell is an LTE cell, and the target cell is an NR cell.

In an embodiment of the present disclosure, the terminal device successfully switches from the LTE cell to the NR cell, and records an SHR based on the SHR configuration information.

The relevant description of the SHR configuration information and the method for recording an SHR based on the SHR configuration information may be found in the relevant description of the above embodiment, which will not be repeated here.

In an embodiment of the present disclosure, the source cell is an LTE cell, the target cell is an NR cell, and the terminal device receives, in the LTE cell, a handover command sent by a network device, and the handover command instructs the terminal device to switch from the LTE cell to the NR cell.

It is understandable that the handover command sent by the network device to the terminal device in the LTE cell may be determined and sent based on the measurement result reported by the terminal device to the network device in the LTE cell. The terminal device may establish a wireless link connection with the LTE cell to report the measurement result to the network device in the LTE cell, and receive, in the LTE cell, the handover command sent by the network device.

In an embodiment of the present disclosure, a handover command instructs a terminal device to switch from an LTE cell to an NR cell, the handover command may carry a target cell identifier, which may be an NR cell identifier. After receiving the handover command in the NR cell, the terminal device may determine the NR cell to which it needs to switch based on the NR cell identifier to perform cell handover.

The terminal device receives, in the LTE cell, the SHR configuration information sent by the network device, so that when the cell handover is successfully completed (switching from the LTE cell to the NR cell), it may determine whether to record the SHR based on the SHR configuration information.

In some embodiments, the source cell is the LTE cell, and the SHR includes first information of the source cell, and the first information includes at least one of:
an ID of the source cell;
a cell-level RSRP of the source cell;
a cell-level RSRQ of the source cell; or
a cell-level SINR of the source cell.

In some embodiments, the target cell is the NR cell, and the SHR includes fourth information of the target cell, and the fourth information includes at least one of:
an ID of the target cell;
a cell-level RSRP of the target cell;
a cell-level RSRQ of the target cell;
a cell-level SINR of the target cell;
RSRP of each SSB of the target cell;
RSRQ of each SSB of the target cell;
SINR of each SSB of the target cell;
RSRP of each CSI-RS of the target cell;
RSRQ of each CSI-RS of the target cell; or
SINR of each CSI-RS of the target cell.

The relevant descriptions of the first information and the fourth information may refer to the relevant descriptions in the above embodiments, and will not be repeated here.

S62, first indication information sent by the terminal device in the NR cell is received in a case that the SHR is recorded at the NR side, in which the first indication information is used to indicate that there is an available SHR.

In an embodiment of the present disclosure, when an SHR is recorded at the NR side of the terminal device, the terminal device sends a first indication message to the network device in the NR cell, and the first indication message indicates that there is an available SHR, so as to inform the network device that there is an available SHR.

The SHR is recorded at the NR side of the terminal device. When the terminal device successfully switches from the source cell (LTE cell) to the target cell (NR cell), the SHR is recorded based on the SHR configuration, and the SHR is recorded in the SHR variable at the corresponding target cell side (NR cell).

The SHR is recorded at the NR side of the terminal device. When the terminal device successfully switches from the source cell (NR cell) to the target cell (LTE cell), the SHR is recorded based on the SHR configuration, and the SHR is recorded in the SHR variable at the NR side of the terminal device.

The relevant description of the first indication information may refer to the relevant description in the above embodiment, and will not be repeated here.

S63, an SHR request message is sent to the terminal device in the NR cell.

S64, the SHR sent by the terminal device in the NR cell based on the SHR request message is received.

In an embodiment of the present disclosure, when the terminal device successfully switches from the source cell (LTE cell) to the target cell (NR cell), and the SHR is recorded in the SHR variable at the NR side of the terminal device, or when the SHR is recorded in the SHR variable at the corresponding target cell side (NR cell), the terminal device may send first indication information to the network device in the NR cell, the first indication information is used to indicate that there is an available SHR. The network device receives the first indication information sent by the terminal device in the NR cell, determines that there is an available SHR, and sends an SHR request message to the terminal device in the NR cell to request the SHR, so as to request the terminal device to send an SHR to the network device.

The request message may be a UE information request.

In addition, when the terminal device receives the SHR request message sent by the network device in the NR cell, it may send an SHR to the network device in the NR cell.

The terminal device may send a UE information response to the network device in the NR cell to send an SHR to the network device.

In some embodiments, the network device forwards the SHR to the LTE cell.

In an embodiment of the present disclosure, when the network device receives an SHR sent by a terminal device in an NR cell, the SHR may be forwarded to the source cell (LTE cell).

According to the embodiments of the present disclosure, the network device sends SHR configuration information to the terminal device in the source cell, the SHR configuration information is used to instruct the terminal device to record an SHR based on the SHR configuration information after successful handover of the cells; the source cell is an LTE cell, and the target cell is an NR cell; the first indication information sent by the terminal device in the NR cell when the SHR is recorded at the NR side is received, the first indication information is used to indicate that there is an available SHR; an SHR request message is sent to the terminal device in the NR cell; and the SHR sent by the terminal device in the NR cell based on the SHR request message is received. As a result, the terminal device supports receiving, in the LTE cell, the SHR configuration configured by the network device, supports recording an SHR when switching from an LTE cell to an NR cell, and supports reporting an SHR from an LTE cell to an NR cell to the network device.

FIG. 7 is a flowchart of a method for recording and reporting an SHR in an RAT provided by an embodiment of the present disclosure.

As shown in FIG. 7, the method is executed by a network device, and the method may include but is not limited to the following steps.

S71, SHR configuration information is sent to the terminal device in the source cell, in which the SHR configuration information is used to instruct the terminal device to record an SHR based on the SHR configuration information after successful handover of the cells, the source cell is the NR cell, and the target cell is the LTE cell.

In an embodiment of the present disclosure, when the source cell is an NR cell and the target cell is an LTE cell, and the terminal device successfully switches from the source cell to the target cell, that is, successfully switches from the NR cell to the LTE cell, an SHR is recorded based on the SHR configuration information.

The relevant description of the SHR configuration information and the method for recording an SHR based on the SHR configuration information may be found in the relevant description of the above embodiment, which will not be repeated here.

In an embodiment of the present disclosure, when the source cell is an NR cell and the target cell is an LTE cell, the terminal device receives a handover command sent by a network device in the NR cell, and the handover command instructs the terminal device to switch from the source cell to the target cell.

It may be understood that the handover command sent by the network device to the terminal device in the NR cell may be determined and sent based on the measurement result reported by the terminal device to the network device in the NR cell. The terminal device may establish a wireless link connection with the NR cell to report the measurement result to the network device in the NR cell, and receive, in the NR cell, the handover command sent by the network device.

In an embodiment of the present disclosure, a handover command instructs a terminal device to switch from a source cell to a target cell, the source cell is an NR cell and the target cell is an LTE cell. The handover command may carry a target cell identifier, which may be an LTE cell identifier. After receiving the handover command in the NR cell, the terminal device may determine the target cell (LTE cell) to which it needs to switch based on the LTE cell identifier to perform cell handover.

The terminal device receives the SHR configuration information sent by the network device in the source cell, so that when the cell switching is successfully completed (switching from the source cell to the target cell), it may determine whether to record the SHR based on the SHR configuration information.

In some embodiments, the source cell is the NR cell, and the SHR includes third information of the source cell, and the third information includes at least one of:
an ID of the source cell;
a cell-level RSRP of the source cell;
a cell-level RSRQ of the source cell;
a cell-level SINR of the source cell;
RSRP of each SSB of the source cell;
RSRQ of each SSB of the source cell;
SINR of each SSB of the source cell;
RSRP of each CSI-RS of the source cell;
RSRQ of each CSI-RS of the source cell; or
SINR of each CSI-RS of the source cell.

In some embodiments, the target cell is the LTE cell, and the SHR includes second information of the target cell, and the second information includes at least one of:
an ID of the target cell;
a cell-level RSRP of the target cell;
a cell-level RSRQ of the target cell; or
a cell-level SINR of the target cell.

For the related description of the third information and the second information, reference may be made to the related description in the above embodiment, which will not be repeated here.

S72, second indication information sent by the terminal device in the LTE cell when the SHR is recorded at the NR side is received, in which the second indication information is used to indicate that an SHR is available; or third indication information sent by the terminal device in the LTE cell when the SHR is recorded at the LTE side is received, in which the third indication information is used to indicate that an SHR is available.

In an embodiment of the present disclosure, when an SHR is recorded at the NR side of the terminal device, the terminal device sends a second indication message to the network device in the NR cell, and the second indication message indicates that there is an available SHR, so as to inform the network device that there is an available SHR.

The SHR is recorded at the NR side of the terminal device. When the terminal device successfully switches from the source cell (NR cell) to the target cell (LTE cell), the SHR is recorded based on the SHR configuration, and the SHR is recorded in the SHR variable at the NR side of the terminal device.

In an embodiment of the present disclosure, when an SHR is recorded at the LTE side of the terminal device, the terminal device sends a third indication message to the network device in the LTE cell, and the third indication message indicates that there is an available SHR to inform the network device that there is an available SHR.

The SHR is recorded at the LTE side of the terminal device. When the terminal device successfully switches from the source cell (NR cell) to the target cell (LTE cell), the SHR is recorded based on the SHR configuration, and the SHR is recorded in the SHR variable at the corresponding target cell side (LTE cell).

The relevant descriptions of the second indication information and the third indication information may refer to the relevant descriptions in the above embodiments, and will not be repeated here.

S73, an SHR request message is sent to the terminal device in the LTE cell.

S74, an SHR sent by the terminal device in the LTE cell based on the SHR request message is received.

In an embodiment of the present disclosure, when the terminal device successfully switches from the source cell (NR cell) to the target cell (LTE cell), and the SHR is recorded in the SHR variable at the NR side of the terminal device, the second indication information may be sent to the network device in the LTE cell, in which the second indication information is used to indicate that there is an available SHR. The network device receives, in the LTE cell, the second indication information sent by the terminal device, determines that there is an available SHR, and sends an SHR request message to the terminal device in the LTE cell to request the SHR, so as to request the terminal device to send an SHR to the network device.

In an embodiment of the present disclosure, when the terminal device successfully switches from the source cell (NR cell) to the target cell (LTE cell), and the SHR is recorded in the SHR variable at the corresponding target cell side (LTE cell), the terminal device may send a third indication information to the network device in the LTE cell, in which the third indication information is used to indicate that there is an available SHR. The network device receives, in the LTE cell, the third indication information sent by the terminal device, determines that there is an available SHR, and sends an SHR request message to the terminal device in the LTE cell to request the SHR, so as to request the terminal device to send an SHR to the network device.

The request message may be a UE information request.

In addition, when the terminal device receives the SHR request message sent by the network device in the LTE cell, it may send an SHR to the network device in the NR cell.

The terminal device may send a UE information response to the network device in the LTE cell to send an SHR to the network device.

In some embodiments, when the source cell is an LTE cell and the target cell is an NR cell, the terminal device ignores the sourceDAPS-FailureReporting field in the SHR configuration information of the handover command.

In an embodiment of the present disclosure, a terminal device receives, in the LTE cell, a handover command sent by a network device. The handover command instructs the terminal device to switch from the LTE cell to the NR cell. The terminal device ignores the sourceDAPS - FailureReporting field in the SHR configuration information of the handover command and switches from the LTE cell to the NR cell.

In some embodiments, the network device forwards the SHR to the NR cell when the SHR is recorded at the LTE side.

In an embodiment of the present disclosure, a network device receives, in the LTE cell, an SHR sent by a terminal device. When the SHR is recorded on the LTE side, the SHR may be forwarded to a source cell (NR cell).

According to the embodiments of the present disclosure, SHR configuration information is sent to the terminal device in the source cell, the SHR configuration information is used to instruct the terminal device to record an SHR based on the SHR configuration information after successful handover of the cells, the source cell is the NR cell, and the target cell is the LTE cell; the second indication information sent by the terminal device in the LTE cell when the SHR is recorded at the NR side is received, the second indication information is used to indicate that there is an available SHR; or, the third indication information sent by the terminal device in the LTE cell when the SHR is recorded at the LTE side is received, the third indication information is used to indicate that there is an available SHR; an SHR request message is sent to the terminal device in the LTE cell; and the SHR sent by the terminal device on from LTE cell based on the SHR request message is received. As a result, the terminal device supports recording an SHR when switching from an NR cell to an LTE cell, and supports reporting an SHR from an NR cell to an LTE cell to a network device.

In the above embodiments provided by the present disclosure, the methods provided by the embodiments of the present disclosure are introduced from the perspectives of the terminal device and the network device, respectively. In order to implement the functions in the methods provided by the above embodiments of the present disclosure, the terminal device and the network device may include a hardware structure and a software module, and implement the above functions in the form of a hardware structure, a software module, or a hardware structure plus a software module. One of the above functions may be executed in the form of a hardware structure, a software module, or a hardware structure plus a software module.

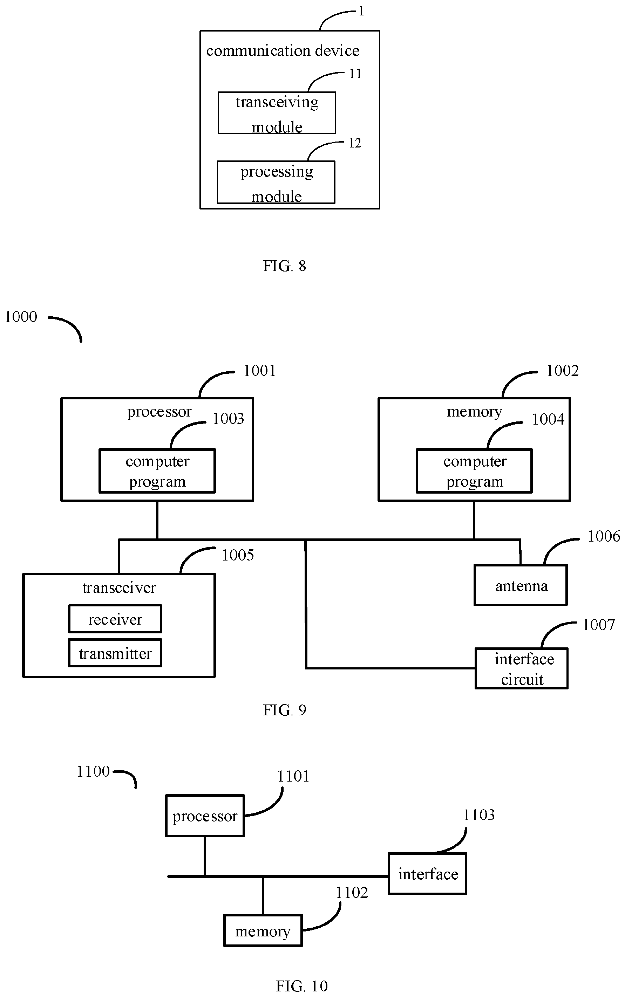

FIG. 8 is a schematic diagram of the structure of a communication device 1 provided in an embodiment of the present disclosure. The communication device 1 shown in FIG. 8 may include a transceiving module 11 and a processing module 12. The transceiving module may include a sending module and/or a receiving module, the sending module is configured to implement a sending function, the receiving module is configured to implement a receiving function, and the transceiving module may implement a sending function and/or a receiving function.

The communication device 1 may be a terminal device, a device in a terminal device, or a device that may be used in conjunction with a terminal device. Alternatively, the communication device 1 may be a network device, a device in a network device, or a device that may be used in conjunction with a network device.

The communication device 1 is a terminal device.

The device includes: a transceiving module 11 and a processing module 12.

The transceiving module 11 is configured to receive SHR configuration information sent by a network device in a source cell, in which the SHR configuration information is used to instruct the terminal device to record the SHR based on the SHR configuration information after a successful handover of the terminal device from the source cell to a target cell, the source cell is an LTE cell, and the target cell is an NR cell, or the source cell is an NR cell, and the target cell is an LTE cell;

The processing module 12 is configured to record the SHR based on the SHR configuration information in response to the successful handover of the terminal device from the source cell to the target cell.

In some embodiments, the processing module 12 is further configured to determine whether to trigger recording of the SHR based on the SHR configuration information; in response to determining to trigger the recording of an SHR based on the SHR configuration information, record the SHR.

In some embodiments, the source cell is the LTE cell, and the SHR includes first information of the source cell, and the first information includes at least one of:
an ID of the source cell;
a cell-level reference signal received power (RSRP) of the source cell;
a cell-level reference signal received quality (RSRQ) of the source cell; or
a cell-level signal to interference plus noise ratio (SINR) of the source cell.

In some embodiments, the target cell is the LTE cell, and the SHR includes second information of the target cell, and the second information includes at least one of:
an ID of the target cell;
a cell-level RSRP of the target cell;
a cell-level RSRQ of the target cell; or
a cell-level SINR of the target cell.

In some embodiments, the source cell is the NR cell, and the SHR includes third information of the source cell, and the third information includes at least one of:
an ID of the source cell;
a cell-level RSRP of the source cell;
a cell-level RSRQ of the source cell;
a cell-level SINR of the source cell;
RSRP of each synchronization signal block (SSB) of the source cell;
RSRQ of each SSB of the source cell;
SINR of each SSB of the source cell;
RSRP of each channel state information reference signal (CSI-RS) of the source cell;
RSRQ of each CSI-RS of the source cell; or
SINR of each CSI-RS of the source cell.

In some embodiments, the target cell is the NR cell, and the SHR includes fourth information of the target cell, and the fourth information includes at least one of:
an ID of the target cell;
a cell-level RSRP of the target cell;
a cell-level RSRQ of the target cell;
a cell-level SINR of the target cell;
RSRP of each SSB of the target cell;
RSRQ of each SSB of the target cell;
SINR of each SSB of the target cell;
RSRP of each CSI-RS of the target cell;
RSRQ of each CSI-RS of the target cell; or
SINR of each CSI-RS of the target cell.

In some embodiments, the SHR is recorded in an SHR variable at an NR side of the terminal device.

In some embodiments, the SHR is recorded in an SHR variable at a corresponding target cell side.

In some embodiments, the target cell is the NR cell, and the method further includes: in response to the SHR being recorded at the NR side, sending first indication information to the network device in the NR cell, in which the first indication information is used to indicate that there is an available SHR.

In some embodiments, the target cell is the LTE cell, and the method further includes: in response to the SHR being recorded at the NR side, sending second indication information to the network device in the LTE cell, in which the second indication information is used to indicate that there is an available SHR.

In some embodiments, the target cell is the LTE cell, and the method further includes: in response to the SHR being recorded at an LTE side, sending third indication information to the network device in the LTE cell, in which the third indication information is used to indicate that there is an available SHR.

In some embodiments, the transceiving module 11 is also configured to receive, in the NR cell, an SHR request message sent by a network device; and send an SHR to the network device in the NR cell based on the SHR request message.

In some embodiments, the transceiving module 11 is further configured to receive, in the LTE cell, an SHR request message sent by a network device; and send an SHR to the network device in the LTE cell based on the SHR request message.

The communication device 1 is a network device.

The device includes: a transceiving module 11.

The transceiving module 11 is configured to send SHR configuration information to a terminal device in a source cell, in which the SHR configuration information is used to instruct the terminal device to record the SHR based on the SHR configuration information after a successful handover of the terminal device from the source cell to a target cell, the source cell is an LTE cell, and the target cell is an NR cell, or the source cell is an NR cell and the target cell is an LTE cell.

In some embodiments, the source cell is the LTE cell, and the SHR includes first information of the source cell, and the first information includes at least one of:
an ID of the source cell;
a cell-level RSRP of the source cell;
a cell-level RSRQ of the source cell; or
a cell-level SINR of the source cell.

In some embodiments, the target cell is the LTE cell, and the SHR includes second information of the target cell, and the second information includes at least one of:
an ID of the target cell;
a cell-level RSRP of the target cell;
a cell-level RSRQ of the target cell; or
a cell-level SINR of the target cell.

In some embodiments, the source cell is the NR cell, and the SHR includes third information of the source cell, and the third information includes at least one of:
an ID of the source cell;
a cell-level RSRP of the source cell;
a cell-level RSRQ of the source cell;
a cell-level SINR of the source cell;
RSRP of each SSB of the source cell;
RSRQ of each SSB of the source cell;
SINR of each SSB of the source cell;
RSRP of each CSI-RS of the source cell;
RSRQ of each CSI-RS of the source cell; or
SINR of each CSI-RS of the source cell.

In some embodiments, the target cell is the NR cell, and the SHR includes fourth information of the target cell, and the fourth information includes at least one of:
an ID of the target cell;
a cell-level RSRP of the target cell;
a cell-level RSRQ of the target cell;
a cell-level SINR of the target cell;
RSRP of each SSB of the target cell;
RSRQ of each SSB of the target cell;
SINR of each SSB of the target cell;
RSRP of each CSI-RS of the target cell;
RSRQ of each CSI-RS of the target cell; or
SINR of each CSI-RS of the target cell.

In some embodiments, the SHR is recorded in an SHR variable at an NR side of the terminal device.

In some embodiments, the SHR is recorded in an SHR variable at a corresponding target cell side.

In some embodiments, the target cell is an NR cell, and the transceiving module 11 is further configured to receive first indication information sent by the terminal device in the NR cell in a case that the SHR is recorded at the NR side, in which the first indication information is used to indicate that there is an available SHR.

In some embodiments, the target cell is an LTE cell, and the transceiving module 11 is further configured to receive second indication information sent by the terminal device in the LTE cell in a case that the SHR is recorded at the NR side, in which the second indication information is used to indicate that there is an available SHR.

In some embodiments, the target cell is an LTE cell, and the transceiving module 11 is further configured to receive third indication information sent by the terminal device in the LTE cell in a case that the SHR is recorded at an LTE side, in which the third indication information is used to indicate that there is an available SHR.

In some embodiments, the transceiving module 11 is also configured to send an SHR request message to the terminal device in the NR cell; and receive the SHR sent by the terminal device in the NR cell based on the SHR request message.

In some embodiments, the transceiving module 11 is further configured to send an SHR request message to the terminal device in the LTE cell; and receive the SHR sent by the terminal device in the LTE cell based on the SHR request message.

In some embodiments, the transceiving module 11 is further configured to forward the SHR to the LTE cell.

In some embodiments, the transceiving module 11 is further configured to forward the SHR to the NR cell when the SHR is recorded at the LTE side.

Regarding the communication device 1 in the above embodiment, the specific mode in which each module performs operations has been described in detail in the embodiment of the method, and will not be elaborated here.

The communication device 1 provided in the above embodiments of the present disclosure achieves the same or similar beneficial effects as the method for recording and reporting an SHR in an RAT provided in some of the above embodiments, which will not be described in detail herein.

FIG. 9 is a schematic diagram of the structure of another communication device 1000 provided in an embodiment of the present disclosure. The communication device 1000 may be a network device, or a terminal device, or a chip, a chip system, or a processor that supports the network device to implement the above method, or a chip, a chip system, or a processor that supports the terminal device to implement the above method. The communication device 1000 may be used to implement the method described in the above method embodiment, and the details may refer to the description in the above method embodiment.

The communication device 1000 may include one or more processors 1001. The processor 1001 may be a general-purpose processor or a dedicated processor, etc. For example, it may be a baseband processor or a central processing unit. The baseband processor may be used to process the communication protocol and communication data, and the central processing unit may be used to control the communication device (such as a network device, a baseband chip, a terminal device, a terminal device chip, a DU or a CU, etc.), execute a computer program, and process the data of the computer program.

Optionally, the communication device 1000 may further include one or more memories 1002, on which a computer program 1004 may be stored, and the memory 1002 executes the computer program 1004 so that the communication device 1000 executes the method described in the above method embodiment. Optionally, data may also be stored in the memory 1002. The communication device 1000 and the memory 1002 may be provided separately or integrated together.

Optionally, the communication device 1000 may further include a transceiver 1005 and an antenna 1006. The transceiver 1005 may be referred to as a transceiving unit, a transceiver, or a transceiving circuit, etc., for implementing a transceiving function. The transceiver 1005 may include a receiver and a transmitter, the receiver may be referred to as a receiver or a receiving circuit, etc., for implementing a receiving function; the transmitter may be referred to as a transmitter or a transmitting circuit, etc., for implementing a transmitting function.

Optionally, the communication device 1000 may further include one or more interface circuits 1007. The interface circuit 1007 is used to receive code instructions and transmit the code instructions to the processor 1001. The processor 1001 runs the code instructions to enable the communication device 1000 to execute the method described in the above method embodiment.

The communication device 1000 is a terminal device, the transceiver 1005 is used to execute S21 in FIG. 2; S31, S33 to S35 in FIG. 3; S41, S43 to S45 in FIG. 4; the processor 1001 is used to execute S22 in FIG. 2; S32 in FIG. 3; S42 in FIG. 4.

The communication device 1000 is a network device, the transceiver 1005 is used to execute S51 in FIG. 5; S61 to S64 in FIG. 6; and S71 to S74 in FIG. 7.

In one implementation, the processor 1001 may include a transceiver for implementing receiving and sending functions. For example, the transceiver may be a transceiving circuit, an interface, or an interface circuit. The transceiving circuit, interface, or interface circuit for implementing the receiving and sending functions may be separate or integrated. The above-mentioned transceiving circuit, interface, or interface circuit may be used for reading and writing code/data, or the above-mentioned transceiving circuit, interface, or interface circuit may be used for transmitting or delivering signals.

In one implementation, the processor 1001 may store a computer program 1003, which runs on the processor 1001 and enables the communication device 1000 to perform the method described in the above method embodiment. The computer program 1003 may be fixed in the processor 1001, in which case the processor 1001 may be implemented by hardware.

In one implementation, the communication device 1000 may include a circuit that can implement the functions of sending, receiving, or communicating in the aforementioned method embodiments. The processor and transceiver described in the present disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be manufactured using various IC process technologies, such as complementary metal oxide semiconductor (CMOS), N-type metal oxide semiconductor (NMOS), P-type metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a terminal device or a network device, but the scope of the communication device described in the present disclosure is not limited thereto, and the structure of the communication device may not be limited by FIG. 9. The communication device may be an independent device or may be part of a larger device. For example, the communication device may be:
(1) an independent integrated circuit (IC), or a chip, or a chip system or a subsystem;
(2) a collection of one or more ICs, optionally including a storage component for storing data or computer programs;
(3) ASIC, such as a modem;
(4) modules that can be embedded in other devices;
(5) receivers, terminal devices, intelligent terminal devices, cellular phones, wireless devices, handheld devices, mobile units, vehicle-mounted devices, network devices, cloud devices, artificial intelligence devices, etc.;
(6) others.

When the communication device is a chip or a chip system, FIG. 10 is a structural diagram of a chip provided in an embodiment of the present disclosure.

The chip 1100 includes a processor 1101 and an interface 1103. The number of the processor 1101 may be one or more, and the number of the interface 1103 may be multiple.

When the chip is used to implement the functions of the terminal device in the embodiment of the present disclosure, the interface 1103 is configured to receive code instructions and transmit the code instructions to the processor. The processor 1101 is configured to run the code instructions to perform the method for recording and reporting an SHR in an RAT as described in some of the above embodiments.

When the chip is used to implement the functions of the network device in the embodiment of the present disclosure, the interface 1103 is used to receive code instructions and transmit the code instructions to the processor. The processor 1101 is configured to run the code instructions to perform the method for recording and reporting an SHR in an RAT as described in some of the above embodiments.

Optionally, the chip 1100 further includes a memory 1102, and the memory 1102 is configured to store necessary computer programs and data.

A person skilled in the art may also understand that the various illustrative logical blocks and steps listed in the embodiments of the present disclosure may be implemented by electronic hardware, computer software, or a combination thereof. Whether such functions are implemented by hardware or software depends on the specific application and the design requirements of the entire system. A person skilled in the art may use various methods to implement the functions described for each specific application, but such implementation should not be understood as beyond the protection scope of the embodiments of the present disclosure.

An embodiment of the present disclosure also provide a system for recording and reporting an SHR, the system includes a communication device as a terminal device and a communication device as a network device in the aforementioned embodiment of FIG. 8, or the system includes a communication device as a terminal device and a communication device as a network device in the aforementioned embodiment of FIG. 9.

The present disclosure also provides a readable storage medium having instructions stored thereon, which implement the functions of any of the above method embodiments when executed by a computer.

The present disclosure also provides a computer program product, which implements the functions of any of the above method embodiments when executed by a computer.

In the above embodiments, it can be implemented in whole or in part by software, hardware, firmware or any combination thereof. When implemented by software, it can be implemented in whole or in part in the form of a computer program product. The computer program product includes one or more computer programs. When the computer program is loaded and executed on a computer, the process or function described in the embodiment of the present disclosure is generated in whole or in part. The computer can be a general-purpose computer, a special-purpose computer, a computer network, or other programmable device. The computer program can be stored in a computer readable storage medium, or transmitted from one computer readable storage medium to another computer readable storage medium. For example, the computer program can be transmitted from a website, computer, server or data center by wired (e.g., coaxial cable, optical fiber, digital subscriber line (DSL)) or wireless (e.g., infrared, wireless, microwave, etc.) mode to another website, computer, server or data center. The computer readable storage medium can be any available medium that can be accessed by a computer or a data storage device such as a server or data center that includes one or more available medium. The available medium may be a magnetic medium (e.g., a floppy disk, a hard disk, a magnetic tape), an optical medium (e.g., a digital video disc (DVD)), or a semiconductor medium (e.g., a solid state disk (SSD)).

A person skilled in the art can understand that the various numbers such as first and second in the present disclosure are only used for distinction and convenience of description and are not used to limit the scope of the embodiments of the present disclosure, and also indicate the order of precedence.

At least one in the present disclosure may also be described as one or more, and a plurality may be two, three, four or more, which is not limited in the present disclosure. In the embodiments of the present disclosure, for a technical feature, the technical features in the technical feature are distinguished by "first", "second", "third", "A", "B", "C" and "D", etc., and there is no order of precedence or size between the technical features described by the "first", "second", "third", "A", "B", "C" and "D".

The corresponding relationships shown in the tables in the present disclosure can be configured or predefined. The values of the information in each table are only examples and can be configured as other values, which are not limited by the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate deformation adjustments can be made based on the above table, such as splitting, merging, etc. The names of the parameters shown in the titles of the above tables can also use other names that can be understood by the communication device, and the values or representations of the parameters can also be other values or representations that can be understood by the communication device. When implementing the above tables, other data structures can also be used, such as arrays, queues, containers, stacks, linear lists, pointers, linked lists, trees, graphs, structures, classes, heaps, hash tables.

The predefined in the present disclosure may be understood as defined, predefined, stored, pre-stored, pre-negotiated, pre-configured, solidified, or pre-burned.

A person skilled in the art will appreciate that the units and algorithm steps of each example described in conjunction with the embodiments of the present disclosure can be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered to be beyond the scope of this disclosure.

A person skilled in the art can clearly understand that, for the convenience and brevity of description, the specific working processes of the systems, devices and units described above can refer to the corresponding processes in the aforementioned method embodiments and will not be repeated here.

The above is only a specific embodiment of the present disclosure, but the protection scope of the present disclosure is not limited thereto. A person skilled in the art who is familiar with the technical field can easily think of changes or substitutions within the technical scope in the present disclosure, which should be included in the protection scope of the present disclosure. Therefore, the protection scope of the present disclosure should be based on the protection scope of the claims.

## Claims

1. A method for recording and reporting a successful handover report (SHR) in a radio access technology (RAT), performed by a terminal device, comprising:
receiving SHR configuration information sent by a network device in a source cell, wherein the SHR configuration information is used to instruct the terminal device to record the SHR based on the SHR configuration information after a successful handover of the terminal device from the source cell to a target cell, the source cell is a long term evolution (LTE) cell, and the target cell is a new radio (NR) cell, or the source cell is an NR cell, and the target cell is an LTE cell;
in response to the successful handover of the terminal device from the source cell to the target cell, recording the SHR based on the SHR configuration information.

2. The method according to claim 1, wherein recording the SHR based on the SHR configuration information comprises:
determining whether to trigger recording of the SHR based on the SHR configuration information;
in response to determining to trigger the recording of the SHR based on the SHR configuration information, recording the SHR.

3. The method according to claim 1 or 2, wherein the source cell is the LTE cell, and the SHR comprises first information of the source cell, and the first information comprises at least one of:
an ID of the source cell;
a cell-level reference signal received power (RSRP) of the source cell;
a cell-level reference signal received quality (RSRQ) of the source cell; or
a cell-level signal to interference plus noise ratio (SINR) of the source cell.

4. The method according to claim 1 or 2, wherein the target cell is the LTE cell, and the SHR comprises second information of the target cell, and the second information comprises at least one of:
an ID of the target cell;
a cell-level RSRP of the target cell;
a cell-level RSRQ of the target cell; or
a cell-level SINR of the target cell.

5. The method according to claim 1 or 2, wherein the source cell is the NR cell, and the SHR comprises third information of the source cell, and the third information comprises at least one of:
an ID of the source cell;
a cell-level RSRP of the source cell;
a cell-level RSRQ of the source cell;
a cell-level SINR of the source cell;
RSRP of each synchronization signal block (SSB) of the source cell;
RSRQ of each SSB of the source cell;
SINR of each SSB of the source cell;
RSRP of each channel state information reference signal (CSI-RS) of the source cell;
RSRQ of each CSI-RS of the source cell; or
SINR of each CSI-RS of the source cell.

6. The method according to claim 1 or 2, wherein the target cell is the NR cell, and the SHR comprises fourth information of the target cell, and the fourth information comprises at least one of:
an ID of the target cell;
a cell-level RSRP of the target cell;
a cell-level RSRQ of the target cell;
a cell-level SINR of the target cell;
RSRP of each SSB of the target cell;
RSRQ of each SSB of the target cell;
SINR of each SSB of the target cell;
RSRP of each CSI-RS of the target cell;
RSRQ of each CSI-RS of the target cell; or
SINR of each CSI-RS of the target cell.

7. The method according to claim 1 or 2, wherein the SHR is recorded in an SHR variable at an NR side of the terminal device.

8. The method according to claim 1 or 2, wherein the SHR is recorded in an SHR variable at a corresponding target cell side.

9. The method according to claim 7 or 8, wherein the target cell is the NR cell, and the method further comprises:
in response to the SHR being recorded at the NR side, sending first indication information to the network device in the NR cell, wherein the first indication information is used to indicate that there is an available SHR.

10. The method according to claim 7, wherein the target cell is the LTE cell, and the method further comprises:
in response to the SHR being recorded at the NR side, sending second indication information to the network device in the LTE cell, wherein the second indication information is used to indicate that there is an available SHR.

11. The method according to claim 8, wherein the target cell is the LTE cell, and the method further comprises:
in response to the SHR being recorded at an LTE side, sending third indication information to the network device in the LTE cell, wherein the third indication information is used to indicate that there is an available SHR.

12. The method according to claim 9, further comprising:
receiving ,an SHR request message sent by the network device in the NR cell;
sending the SHR to the network device in the NR cell based on the SHR request message.

13. The method according to claim 10 or 11, further comprising:
receiving an SHR request message sent by the network device in the LTE cell;
sending the SHR to the network device in the LTE cell based on the SHR request message.

14. A method for recording and reporting an SHR in an RAT, performed by a network device, comprising:
sending SHR configuration information to a terminal device in a source cell, wherein the SHR configuration information is used to instruct the terminal device to record the SHR based on the SHR configuration information after a successful handover of the terminal device from the source cell to a target cell, the source cell is an LTE cell, and the target cell is an NR cell, or the source cell is an NR cell and the target cell is an LTE cell.

15. The method according to claim 14, wherein the source cell is the LTE cell, and the SHR comprises first information of the source cell, and the first information comprises at least one of:
an ID of the source cell;
a cell-level RSRP of the source cell;
a cell-level RSRQ of the source cell; or
a cell-level SINR of the source cell.

16. The method according to claim 14, wherein the target cell is the LTE cell, and the SHR comprises second information of the target cell, and the second information comprises at least one of:
an ID of the target cell;
a cell-level RSRP of the target cell;
a cell-level RSRQ of the target cell; or
a cell-level SINR of the target cell.

17. The method according to claim 14, wherein the source cell is the NR cell, and the SHR comprises third information of the source cell, and the third information comprises at least one of:
an ID of the source cell;
a cell-level RSRP of the source cell;
a cell-level RSRQ of the source cell;
a cell-level SINR of the source cell;
RSRP of each SSB of the source cell;
RSRQ of each SSB of the source cell;
SINR of each SSB of the source cell;
RSRP of each CSI-RS of the source cell;
RSRQ of each CSI-RS of the source cell; or
SINR of each CSI-RS of the source cell.

18. The method according to claim 14, wherein the target cell is the NR cell, and the SHR comprises fourth information of the target cell, and the fourth information comprises at least one of:
an ID of the target cell;
a cell-level RSRP of the target cell;
a cell-level RSRQ of the target cell;
a cell-level SINR of the target cell;
RSRP of each SSB of the target cell;
RSRQ of each SSB of the target cell;
SINR of each SSB of the target cell;
RSRP of each CSI-RS of the target cell;
RSRQ of each CSI-RS of the target cell; or
SINR of each CSI-RS of the target cell.

19. The method according to claim 14, wherein the SHR is recorded in an SHR variable at an NR side of the terminal device.

20. The method according to claim 14, wherein the SHR is recorded in an SHR variable at a corresponding target cell side.

21. The method according to claim 19 or 20, wherein the target cell is the NR cell, and the method further comprises:
receiving first indication information sent by the terminal device in the NR cell in a case that the SHR is recorded at the NR side, wherein the first indication information is used to indicate that there is an available SHR.

22. The method according to claim 19, wherein the target cell is the LTE cell, and the method further comprises:
receiving second indication information sent by the terminal device in the LTE cell in a case that the SHR is recorded at the NR side, wherein the second indication information is used to indicate that there is an available SHR.

23. The method according to claim 20, wherein the target cell is the LTE cell, and the method further comprises:
receiving third indication information sent by the terminal device in the LTE cell in a case that the SHR is recorded at an LTE side, wherein the third indication information is used to indicate that there is an available SHR.

24. The method according to claim 21, further comprising:
sending an SHR request message to the terminal device in the NR cell;
receiving the SHR sent by the terminal device in the NR cell based on the SHR request message.

25. The method according to claim 22 or 23, further comprising:
sending an SHR request message to the terminal device in the LTE cell;
receiving the SHR sent by the terminal device in the LTE cell based on the SHR request message.

26. The method according to claim 24, further comprising:
forwarding the SHR to the LTE cell.

27. The method according to claim 25, further comprising:
forwarding the SHR to the NR cell in a case that the SHR is recorded at the LTE side.

28. A communication device, comprising:
a transceiving module, configured to receive SHR configuration information sent by a network device in a source cell, wherein the SHR configuration information is used to instruct the terminal device to record the SHR based on the SHR configuration information after a successful handover of the terminal device from the source cell to a target cell, the source cell is an LTE cell, and the target cell is an NR cell, or the source cell is an NR cell, and the target cell is an LTE cell;
a processing module, configured to record the SHR based on the SHR configuration information in response to the successful handover of the terminal device from the source cell to the target cell.

29. A communication device, comprising:
a transceiving module, configured to send SHR configuration information to a terminal device in a source cell, wherein the SHR configuration information is used to instruct the terminal device to record the SHR based on the SHR configuration information after a successful handover of the terminal device from the source cell to a target cell, the source cell is an LTE cell, the target cell is an NR cell, or the source cell is an NR cell and the target cell is an LTE cell.

30. A communication device, comprising a processor and a memory, wherein the memory stores a computer program, and the processor executes the computer program stored in the memory to perform the method according to any one of claims 1 to 14, or to perform the method according to any one of claims 15 to 27.

31. A communication device, comprising: a processor and an interface circuit, wherein
the interface circuit is configured to receive code instructions and transmit the code instructions to the processor;
the processor is configured to run the code instructions to perform the method according to any one of claims 1 to 14, or to perform the method according to any one of claims 15 to 27.

32. A computer readable storage medium storing instructions, wherein the instructions are executed to implement the method according to any one of claims 1 to 14, or the method according to any one of claims 15 to 27.
